# EUROPEAN PATENT APPLICATION

(11) **EP 3 002 688 A1**
(43) Date of publication of application: **06.04.2016**
(21) Application number: 15187278.5
(22) Date of filing: 29.09.2015
(51) Int. Cl.: G06F 17/30

(54) **INFORMATION SHARING METHOD AND ELECTRONIC DEVICE THEREOF**

(30) Priority: 01.10.2014 KR 20140132498
(71) Applicant: Samsung Electronics Co., Ltd., Gyeonggi-do 16677 (KR)
(72) Inventor: Kim, Kyung Tae, 16539 Gyeonggi-do (KR); Lee, Jung Jik, 34958 Daejeon (KR); Jwa, Chang Hyup, 63174 Jeju-do (KR); Yoo, Jae Bong, 13555 Gyeonggi-do (KR); Lee, Sun Kee, 13607 Gyeonggi-do (KR); Song, Hyo Jung, 03643 Seoul (KR); Choi, Kook Tae, 06762 Seoul (KR)
(74) Representative: Lubberdink, Pim

(57) **Abstract**

An electronic device includes a communication module configured to access a first webpage indicated by a first URI, a message acquisition module configured to obtain a message including a second URI that indicates a second webpage and additional information about content on the second webpage, a display module, and a control module configured to compare the first URI and/or a URI linked to an object on the first webpage with the second URI and to control the display module to display at least part of the additional information on the first webpage depending on a result of the comparison.

## Description

### BACKGROUND

### 1. Field of the Disclosure

The present disclosure relates generally to a technique for sharing information by users of electronic devices.

### 2. Description of the Related Art

With recent advances in mobile communication technology, electronic devices have been transformed into easily carried devices able to freely access one or more wired or wireless networks. For example, electronic devices (e.g., smartphones) may make available various telecommunication functions, including internet access and chatting functionality, in addition to conventional call and message transmission/reception (e.g., Short Messaging System (SMS) functionality) functions.

Generally, conventional electronic device (e.g., smartphone) users are known to frequently share information pertaining to their common interests. As smartphones become more widely adopted, users actively share information obtained from the internet.

However, people who want to share information (for example, sharers) obtain the majority of the information through mobile internet browsing employing a smartphone. Accordingly, in order to share the information by the sharers, a URL address containing information that the sharer wishes to distribute while web browsing is copied and transmitted to a receiver. A screenshot of the information can also be converted and transmitted as an image file. Sharers may have their own opinions on the information to be shared and may want to share those opinions, in addition to the information to be shared, with other people. However, when a URL address is copied and transmitted or a screenshot image is transmitted, sharers would separate the opinions to be shared from the URL and the screenshot image and then transmit them. Moreover, receivers receive a webpage that the received URL indicates or the screenshot image and the sharers' opinions through separate screens. Accordingly, it is difficult for receivers to intuitively recognize the relevance between sharers' opinions, a webpage that a URL indicates, and a screenshot image.

### SUMMARY

Accordingly, an aspect of the present disclosure is to provide an information sharing method for integrating a Uniform Resource Identifier (URI) of information obtained through internet browsing, along with additional information that a sharer inputs into one message, transmitting the one message during sharing, and checking information that a sharer wants to share and the information that the sharer inputs at a glance, and an electronic device for performing the same during reception.

In accordance with an aspect of the present disclosure, an information sharing method of an electronic device includes receiving by the electronic device additional information about content on a webpage; inputting by the electronic device the additional information into a message including a Uniform Resource Identifier (URI) of the webpage; obtaining by the electronic device of a destination of the message including the URI of the webpage and the additional information; and transmitting by the electronic device of the message to the destination.

Obtaining a destination of the message may include obtaining a destination on the basis of user input.

In accordance with an aspect of the present disclosure, an information sharing method of an electronic device includes accessing by the electronic device a first webpage indicated by a first URI; obtaining by the electronic device a message including a second URI that indicates a second webpage and additional information about content on the second webpage; comparing the first URI and/or a URI linked to an object on the first webpage with the second URI; and displaying at least part of the additional information on the first webpage depending on a result of the comparison.

In accordance with an aspect of the present disclosure, an electronic device includes a communication module configured to access a first webpage indicated by a first URI; a message acquisition module configured to obtain a message including a second URI that indicates a second webpage and additional information about content on the second webpage; a display component; and a control module configured to compare the first URI and/or a URI linked to an object on the first webpage with the second URI and to control the display component to display at least part of the additional information on the first webpage depending on a result of the comparison.

### BRIEF DESCRIPTION OF THE DRAWINGS

The above and other aspects, features, and advantages of certain embodiments of the present disclosure will become more apparent from the following description taken in conjunction with the accompanying drawings, in which:
FIG. 1 is a conceptual diagram of a system illustrating a network environment including an electronic device according to various embodiments of the present disclosure;
FIG. 2 is a schematic block diagram illustrating a configuration of an electronic device according to various embodiments of the present disclosure;
FIG. 3 is a flowchart illustrating a message transmission method in an information sharing method according to various embodiments of the present disclosure;
FIGs. 4A and 4B are screenshot views illustrating screens of an electronic device to describe a message transmission method in an information sharing method according to various embodiments of the present disclosure;
FIG. 5 is a flowchart illustrating an additional information displaying method in an information sharing method according to various embodiments of the present disclosure;
FIG. 6 is a flowchart illustrating an additional information displaying method in an information sharing method according to various embodiments of the present disclosure;
FIGs. 7A and 7B are screenshot views, and FIG. 7C is a conceptual view, illustrating screens of an electronic device to describe an additional information displaying method in an information sharing method according to various embodiments of the present disclosure;
FIGs. 8A, 8B, and 8C are screenshot views illustrating screens of an electronic device to describe an additional information displaying method in an information sharing method according to various embodiments of the present disclosure;
FIGs. 9A, 9B, 9C, and 9D are screenshot views illustrating screens of an electronic device where additional information is displayed in association with a corresponding object according to various embodiments of the present disclosure;
FIGs. 10A and 10B are screenshot views illustrating another screen of an electronic device where additional information is displayed in association with a corresponding object according to various embodiments of the present disclosure;
FIG. 11 is a flowchart illustrating an additional information displaying method in an information sharing method according to various embodiments of the present disclosure;
FIGs. 12A, 12B, and 12C are screenshot views illustrating screens of an electronic device to describe an additional information displaying method in an information sharing method according to various embodiments of the present disclosure;
FIG. 13 is a flowchart illustrating a further information (re-additional information) transmission method in an information sharing method according to various embodiments of the present disclosure;
FIGs. 14A and 14B are screenshot views illustrating screens to describe a method of transmitting a message including further information (re-additional information) in an information sharing method according to various embodiments of the present disclosure;
FIG. 15 is a schematic block diagram illustrating an electronic device in a network environment according to various embodiments of the present disclosure; and
FIG. 16 is a schematic block diagram of an electronic device according to various embodiments of the present disclosure.

### DETAILED DESCRIPTION OF EMBODIMENTS OF THE DISCLOSURE

Hereinafter, various embodiments of the present disclosure are disclosed with reference to the accompanying drawings. However, this does not limit the various embodiments of the present disclosure to a specific embodiment and it should be understood that the present disclosure covers all the modifications, equivalents, and/or alternatives of this disclosure, which are considered to be within the scope of the appended claims and their equivalents. With respect to the descriptions of the drawings, like reference numerals refer to like elements.

The terms "include," "comprise," and "have", or "may include," or "may comprise" and "may have" used herein indicate disclosed functions, operations, or existence of elements but do not exclude other functions, operations or elements.

For instance, the expressions "A or B", or "at least one of A or/and B" may include A, B, or both A and B. For instance, the expressions "A or B", or "at least one of A or/and B" may indicate (1) at least one A, (2) at least one B, or (3) both at least one A and at least one B.

The terms such as "1st", "2nd", "first", "second", and the like used herein may refer to modifying various different elements of various embodiments of the present disclosure, but do not limit the elements. The expressions may be used to distinguish one element from another element. For instance, "a first user device" and "a second user device" may indicate different users regardless of the order or the importance. For example, a first component may be referred to as a second component and vice versa without departing from the scope of the present disclosure.

In various embodiments of the present disclosure, it will be understood that when a component (for example, a first component) is referred to as being "(operatively or communicatively) coupled with/to" or "connected to" another component (for example, a second component), the component can be directly connected to the other component or connected through another component (for example, a third component). In various embodiments of the present disclosure, it will be understood that when a component (for example, a first component) is referred to as being "directly connected to" or "directly access" another component (for example, a second component), another component (for example, a third component) does not exist between the component (for example, the first component) and the other component (for example, the second component).

The expression "configured to" used in various embodiments of the present disclosure may be interchangeably used with "suitable for", "having the capacity to", "designed to", "adapted to", "made to", or "capable of" according to a situation, for example. The term "configured to" may not necessarily mean "specifically designed to" in terms of hardware. Instead, the expression "a device configured to" in some situations may mean that the device and another device or part are "capable of". For example, the phrase "a processor configured to perform A, B, and C" may mean a dedicated processor (for example, an embedded processor) for performing a corresponding operation or a general-purpose processor (for example, a CPU or application processor) for performing corresponding operations by executing at least one software program stored in a memory device.

Terms used in various embodiments of the present disclosure are used to describe specific embodiments of the present disclosure, and are not intended to limit the scope of other embodiments. The terms of a singular form may include plural forms unless they have a clearly different meaning in the context. Unless otherwise indicated herein, all the terms used herein, which include technical or scientific terms, may have the same meanings that are generally understood by a person skilled in the art. In general, terms defined in the dictionary should be considered to have the same meaning as the contextual meaning of the related art, and, unless clearly defined herein, should not be understood abnormally or as having an excessively formal meaning. In any case, the terms defined in this specification cannot be interpreted as excluding embodiments of the present disclosure.

According to various embodiments of the present disclosure, electronic devices may include at least one of smartphones, tablet personal computers (PCs), mobile phones, video phones, electronic book (e-book) readers, desktop personal computers (PCs), laptop personal computers (PCs), netbook computers, workstation server, personal digital assistants (PDAs), portable multimedia player (PMPs), MP3 players, mobile medical devices, cameras, and wearable devices (for example, smart glasses, head-mounted-devices (HMDs), electronic apparel, electronic bracelets, electronic necklaces, electronic appcessories, electronic tattoos, smart mirrors, and smart watches).

According to some embodiments of the present disclosure, an electronic device may be smart home appliances. The smart home appliances may include at least one of, for example, televisions, digital video disk (DVD) players, audios, refrigerators, air conditioners, cleaners, ovens, microwave ovens, washing machines, air cleaners, set-top boxes, home automation control panels, security control panels, TV boxes (e.g., Samsung HomeSync^{™}, Apple TV^{™} or Google TV^{™}), game consoles (for example, Xbox™ and PlayStation™), electronic dictionaries, electronic keys, camcorders, and electronic picture frames.

According to some embodiments of the present disclosure, an electronic device may include at least one of various medical devices supporting call forwarding service (for example, various portable measurement devices (for example, glucometers, heart rate meters, blood pressure meters, temperature meters, etc.), magnetic resonance angiography (MRA) devices, magnetic resonance imaging (MRI) devices, computed tomography (CT) devices, medical imaging devices, ultrasonic devices, etc.), navigation devices, global positioning system (GPS) receivers, event data recorders (EDRs), flight data recorders (FDRs), vehicle infotainment devices, marine electronic equipment (for example, marine navigation systems, gyro compasses, etc.), avionics, security equipment, vehicle head units, industrial or household robots, financial institutions' automatic teller's machines (ATMs), or stores' point of sales (POS) devices or internet of things (for example, bulbs, various sensors, electric or gas meters, sprinkler systems, fire alarms, thermostats, street lights, toasters, exercise equipment, hot water tanks, heaters, boilers, etc.).

In various embodiments of the present disclosure, an electronic device may include at least one of part of furniture or buildings/structures supporting call forwarding service, electronic boards, electronic signature receiving devices, projectors, and various measuring instruments (for example, water, electricity, gas, or radio signal measuring instruments). An electronic device according to various embodiments of the present disclosure may be one of the above-mentioned various devices or a combination thereof. Additionally, an electronic device according to an embodiment of the present disclosure may be a flexible electronic device. Additionally, an electronic device according to an embodiment of the present disclosure is not limited to the above-mentioned devices, and may include new types of electronic devices according to the development of technology.

Hereinafter, an electronic device according to various embodiments of the present disclosure will be described in more detail with reference to the accompanying drawings. The term "user" in this disclosure may refer to a person using an electronic device or a device using an electronic device (for example, an artificial intelligence electronic device).

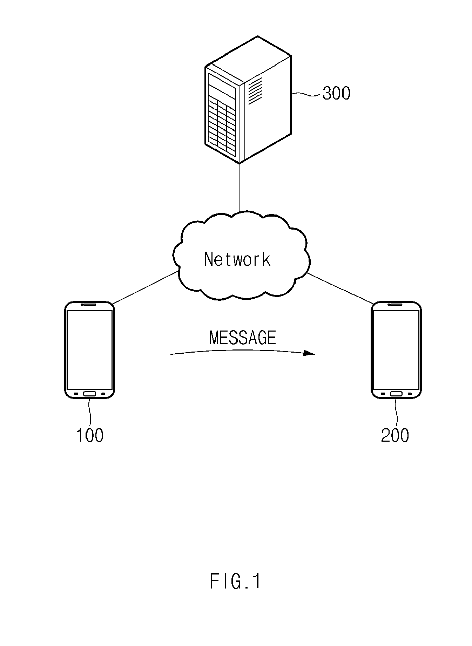

FIG. 1 is a conceptual view illustrating a network environment including electronic devices 100 and 200 according to various embodiments of the present disclosure.

Referring to FIG. 1, the electronic devices 100 and 200 and a web server 300 may be mutually connected to each other through a network. The electronic devices 100 and 200, for example, may correspond to electronic devices capable of browsing the internet.

The electronic device 100 may access a web server 300 through the network and may view a webpage. When a user of the electronic device 100 finds content to be shared from one or more webpages, the user may input additional information to the content. In doing so, the electronic device 100 may receive or obtain the additional information. The electronic device 100 may generate a message including the additional information and a Uniform Resource Identifier (URI) for accessing the webpage where the content exists. The electronic device 100 may then transmit the message to the electronic device 200 (e.g., of a recipient) through the network.

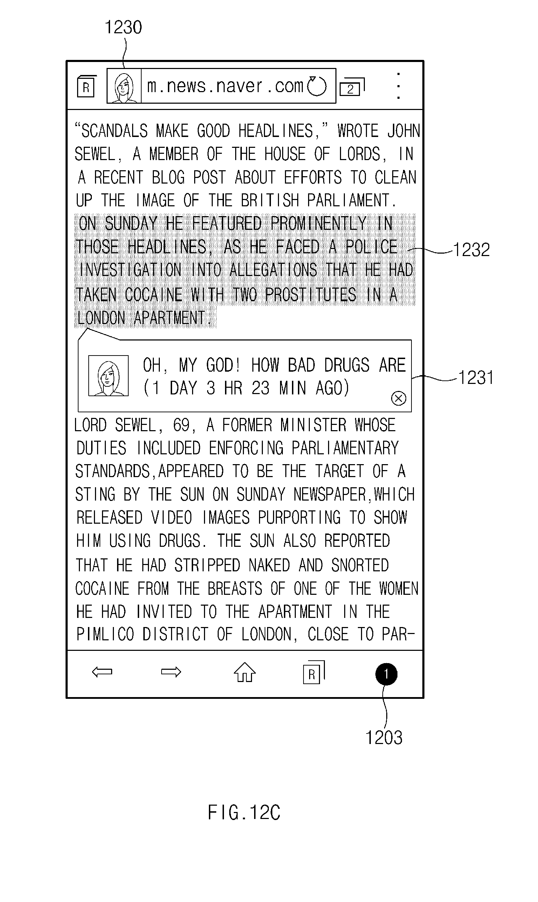

The electronic device 200 may receive the message from the electronic device 100 (e.g., the sender). The electronic device 200 may access the webpage that the URI included in the received message indicates by an operation for selecting the message. In an alternative embodiment, the electronic device 200 may access the webpage that the URI included in the received message indicates by an operation for switching and changing the webpage. When accessing the webpage, the electronic device 200 may display at least part of the additional information on the webpage. Thus, a receiving user of the electronic device 200 may view at least part of the additional information that the sending user of the electronic device 100 inputs on the webpage (see FIG. 12C).

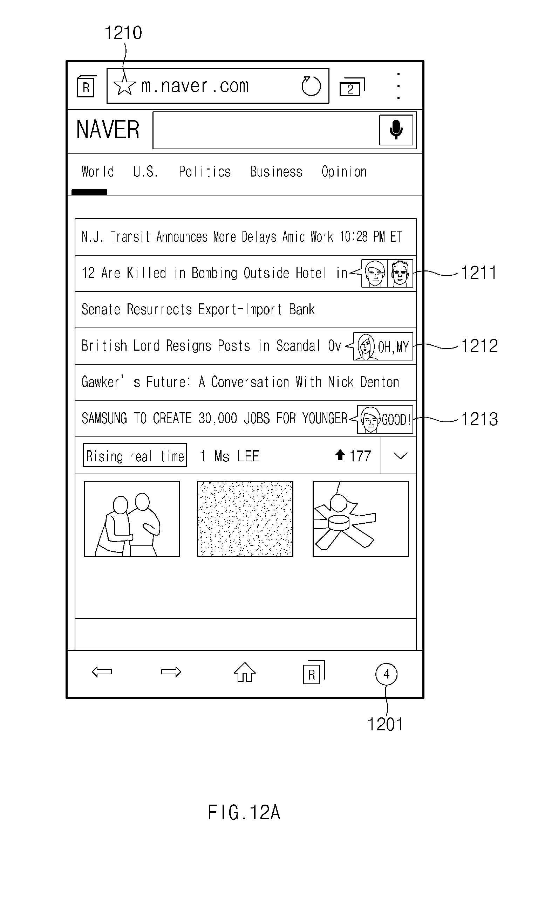

Moreover, after receiving a message including a URI and additional information from the electronic device 100, the electronic device 200 may access another webpage including an object to which the URI is connected (or linked). That is, the electronic device 200 may access a webpage having a different URI from a URI included in a message and the accessed webpage may include an object linked to the URI included in the message. A URI linked to such an object, for example, may be included in the source code of the accessed webpage. The electronic device 200 may display at least part of additional information included in a message on the accessed webpage. Thus, a user of the electronic device 200 may check additional information that a user inputs on the webpage (see FIG. 12A).

The web server 300 may provide a webpage that the electronic devices 100 and 200 can access. Additionally, the web server 300 may store predetermined data (for example, messages, user identification information, terminal identification information, and images).

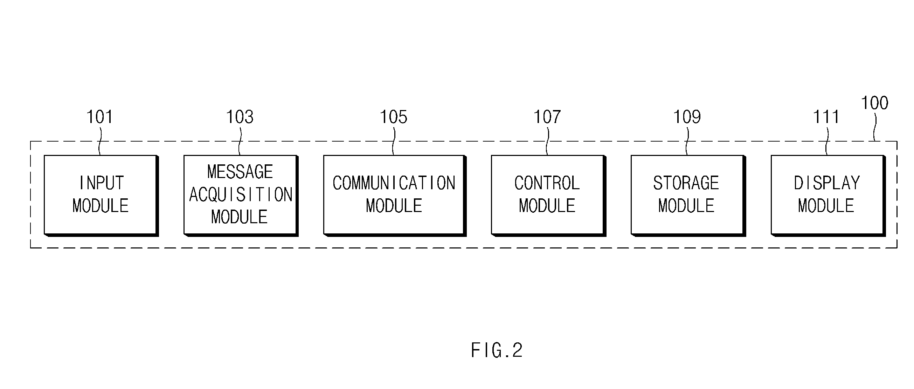

A network environment including the electronic devices 100 and 200 and the web server 300 is briefly described above. Hereinafter, an electronic device and an information sharing method according to various embodiments of the present disclosure are described with reference to FIGS. 2 to 16.

FIG. 2 is a schematic block diagram illustrating a configuration of an electronic device 100 according to various embodiments of the present disclosure.

Referring to FIG. 2, the electronic device 100 may include an input module 101, a message acquisition module 103, a communication module 105, a control module 107, a storage module 109 and a display module 111. According to various embodiments of the present disclosure, modifications in which a part of the configuration is omitted or some configurations are added may be accomplished by those skilled in the art. Since the configuration of the electronic device 200 corresponds to that of the electronic device 100, its description is omitted.

The input module 101 may receive additional information about content on a webpage from a user. For example, the input module 101 may include a touch pad, a keyboard, a microphone, a tablet, a digitizer, and the interfaces thereof. The additional information, comprising various types of input information inputted from a user, may have forms of text, voice, and drawing.

The additional information, for example, may include comments about content on a webpage (e.g., user's feelings, opinions, preferences, emphasis, translations into another language, and so on). According to embodiments of the present disclosure, the additional information may further include a scroll position on a webpage of content, or modification information of content (e.g., content's shading, font size, and scale). Further, the input module 101 may additionally receive information on the additional information that is input by another user (hereinafter "further information" or "re-additional information").

The message acquisition module 103 may obtain a message received from another electronic device. For example, the message may be received from another electronic device through the communication module 105 and then stored in the storage module 109. The message acquisition module 103 may read and obtain a message from the storage module 109 storing received messages separately. Such a message may include the URI of a webpage and additional information about content on a webpage. The URI includes Uniform Resource Locators (URL) and Uniform Resource Names (URN). As one example of a URI, a URL is used in the description below.

In addition to a URI and additional information, the message may include one or both of identification information of a user who generates the additional information and identification information of a user who transmits the message. For example, the message may have the following form.

### ┌ www.naver.com#id=ktf.kim&key="..."&msg="Look at this"&scroll="0,100"┘

In the message, ┌www.naver.com┘ is the URL (URI) of a webpage; ┌ id=ktf.kim┘ is the ID (that is, identification information) of a user (that is, ktf.kim) who transmits the message; ┌key="..."┘ is a key value for authenticating that ktf.kim transmits the message; ┌ msg="Look at this"┘ is a comment (e.g., additional information) about content on a webpage; and ┌scroll="0,100"┘ is a scroll position on a webpage of content relating to additional information.

On the other hand, when the additional information included in a message has a drawing form, vector graphic data may be included. Additionally, when a message includes a plurality of drawings, an electronic device may perform an animation effect that displays drawings in the order that each drawing is input.

The communication module 105 may communicate with the web server 300 in order to access a webpage that a URI indicates. The communication module 105 may transmit a message to another electronic device or receive a message from another electronic device through a network. The network, for example, may be a wired network, a cellular network (for example, 3G/4G communication network), or a wireless network (for example, Bluetooth, Wi-Fi direct, Near Field Communication (NFC), etc.). The communication module 105 may be implemented with an appropriate module according to the type of network.

The control module 107 may control each operation of other components (for example, the input module 101, the message acquisition module 103, the communication module 105, the storage module 109, and the display module 111). Hereinafter, a specific operation of the control module 107 is divided into a case where the electronic device 100 functions as an electronic device transmitting a message and a case that the electronic device 100 functions as an electronic device receiving a message.

When the electronic device 100 functions as an electronic device transmitting a message, the control module 107 may generate a message including a URI of the webpage and the additional information.

The control module 107 may specify the destination of the message and control to allow the communication module 105 to transmit the message to the predetermined destination. The destination may be specified by user identification information (e.g., SNS(social networking service) account and mail account) of a user who receives a message or terminal identification information (for example, a portable terminal's phone number and MAC address) of a user who receives a message.

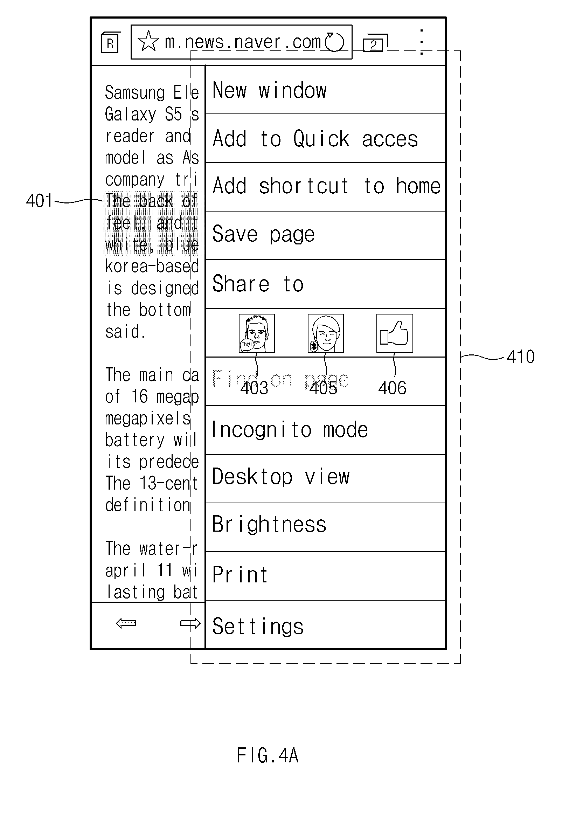

According to an embodiment of the present disclosure, the destination of a message specified by the control module 107 may be specified by selecting an object that matches a messaging service for transmitting a message with the user identification information of the destination. That is, for example, "a messaging service for transmitting a message" and "the user identification information of the destination" may correspond to each other in the object (for example, an object 403 of FIG. 4A that matches a messaging service "Chat On" with "a Chat On account" of a destination). The "messaging service" may be a service that is frequently used in the past with respect to a user of a corresponding destination or may be a service that is currently activated in the background.

According to an embodiment of the present disclosure, the destination of a message specified by the control module 107 may be specified by selecting an object that matches a network for transmitting a message with the terminal identification information of the destination. That is, for example, the object may allow "a network for transmitting a message" to correspond to "the terminal identification information of the destination" (for example, an object 405 of FIG. 4A that matches a "Bluetooth" wireless network with the "MAC address" of a destination electronic device).

Additionally, according to an embodiment of the present disclosure, the destination of a message specified by the control module 107 may be specified by selecting a predetermined object corresponding to a plurality of destinations that are grouped in advance.

When the electronic device 100 functions as an electronic device receiving a message, the control module 107 may compare the URI (hereinafter "the first URI") of a webpage (hereinafter "a first webpage") accessed through the communication module 105 or the URI linked to an object on the first webpage and the URI (hereinafter "the second URI") included in a message that the message acquisition module 103 obtains.

According to an embodiment of the present disclosure, the control module 107 may determine whether the first URI and the second URI correspond (or are identical) to each other. According to another embodiment of the present disclosure, the control module 107 may determine whether the second URI corresponds (or is identical) to the URI linked to the object on the first webpage. Such determinations are made based on whether there is a part relating to the second URI on the first webpage to be displayed through the display module 111, and are not limited thereto.

The control module 107 may control the display module 111 to display at least part of additional information included in a message on the first webpage depending on a result of the comparison (e.g., for determination).

According to an embodiment of the present disclosure, when the first URI corresponds (or is identical) to the second URI, the control module 107 may control the display module 111 to display at least part of additional information included in the message in association with content on the first webpage corresponding to the content on the second webpage. That is, when the first URI corresponds to the second URI, the communication module 105 of the electronic device 100 at the destination side may access a webpage that is identical to a webpage at the time that an electronic device at the transmission side inputs additional information. The control module 107 of the electronic device 100 at the destination side may control the display module 111 to display additional information included in a message to content on the same webpage. Therefore, a user of an electronic device at the transmission side may share additional information about content on a webpage with a user of an electronic device at the destination side.

According to an embodiment of the present disclosure, the control module 107 may reconfigure content on the first webpage accessed through the communication module 105 and may insert at least part of additional information into or between the related content and other content and display it. As configuring contents on the first webpage, the control module 107 may allocate a virtual node to additional information and may insert the allocated virtual node into or between the nodes of the contents on the first webpage.

According to various embodiments of the present disclosure, when a URI linked to an object on the first webpage corresponds to the second URI, the control module 107 may control the display module to display at least part of additional information in association with the object on the first webpage. The object, for example, may correspond to hypertext, image, and text lists for referencing (or linking to) the second webpage that the second URI indicates. For example, the control module 107 may recognize an object indicating the second webpage when parsing the first webpage (that is, the source code thereof).

According to various embodiments of the present disclosure, the control module 107 may control an output of audio data. For example, at least part of the additional information may be displayed in a balloon form in an empty space (a so called gap) around the object.

According to an embodiment of the present disclosure, the control module 107 may control to display at least part of the additional information in a predetermined space on the first webpage. For example, when there is a plurality of the additional information, the control module 107 may list and display the plurality of additional information at one position in a predetermined space at one side of the first webpage.

On the other hand, according to various embodiments of the present disclosure, in addition to the second URI and the additional information, a message may include selectively or both identification information of a user who generates the additional information and identification information of a user who transmits the message.

The control module 107 may control to display an image relating to a user who transmits a message on the first webpage depending on the identification information. The identification information, for example, may be the user identification information of a messaging service used during message transmission or may be the terminal identification information of a network used during message transmission. The control module 107 may compare such identification information with identification information stored in the storage module 109 of the electronic device 100 or a cloud storage. The control module 107 may read an image relating to a user who transmits a message from the storage module 109 or a cloud storage depending on a result of the comparison. Therefore, the control module 107 may perform a control to display an image relating to a user who transmits (or generates) a message in a pseudo element form on the first webpage.

Additionally, according to an embodiment of the present disclosure, when the identification information of a user who transmits a message corresponds to identification information stored in the storage module 109, the control module 107 may control to display at least part of the additional information on the first webpage. That is, when the identification information of a user who transmits a message is not stored in the storage module 109, the control module 107 may not display the additional information on the first webpage.

The storage module 109 may store the identification information of another user. The identification information may be various service accounts (for example, SNS account and mail account) of a user or may be terminal identification information (for example, a portable terminal's phone number and MAC address) at the message destination side. Additionally, the storage module 109 may allow an image relating to the user to correspond to user identification information and store it. That is, the storage module 109 may function as an address book storage. Additionally, the storage module 109 may store messages that another communication module 105 receives. The stored messages may be read by the control module 107 and also may be used for various comparisons or determinations. The storage module 109 may be included in the electronic device 100 or may exist in a form of a cloud storage by another computing device.

The display module 111 may display at least part of a webpage and additional information under the control of the control module 107. Especially, the display module 111 may be implemented using a touch screen. When the display module 111 is implemented using a touch screen, the display module 111 and the input module 101 may be implemented integrally with each other.

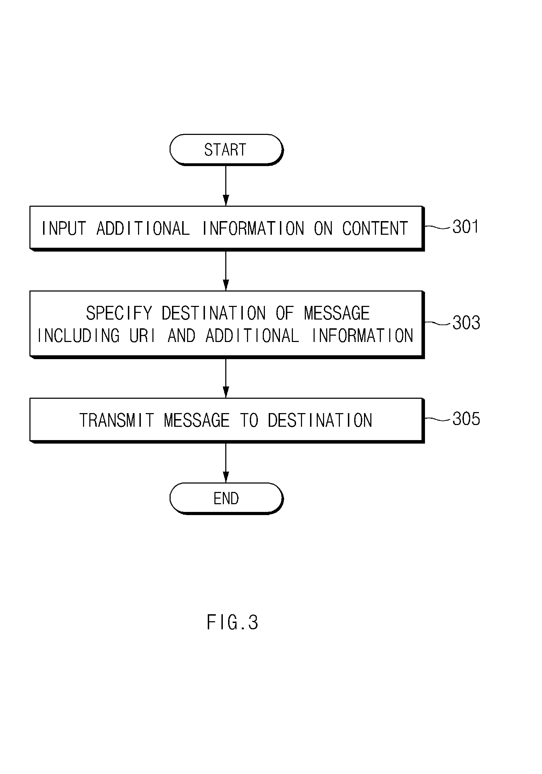

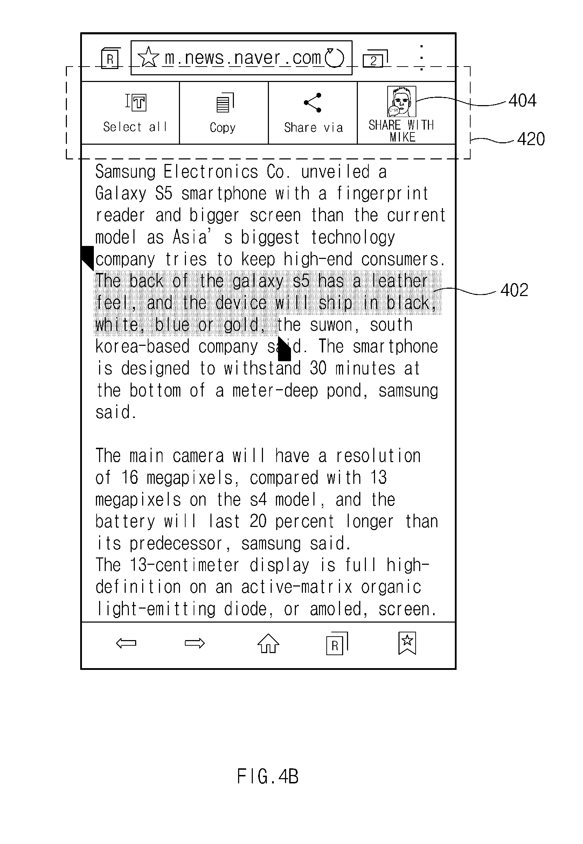

FIG. 3 is a flowchart illustrating a message transmission method in an information sharing method according to various embodiments of the present disclosure. Additionally, FIG. 4A and 4B are screenshot views illustrating a message transmission method in an information sharing method according to various embodiments of the present disclosure.

Referring to FIG. 3, the message transmission method in the information sharing method includes operation 301 for receiving additional information about content on a webpage, operation 303 for specifying a destination to receive a message including the URI of the webpage and the additional information, and operation 305 for transmitting the message to the destination.

In operation 301, the input module 101 may receive additional information about content on a webpage from a user. The additional information may correspond to various types of input information from the user. The additionally information, for example, may include comments about content on a webpage. On the other hand, content on a webpage may be selected by a user's manipulation. For example, as shown in a shaded portion 401 of FIG. 4A and a shaded portion 402 of FIG. 4B, content may be selected by a drag manipulation using an input device such as a stylus, a pen, and a mouse, or a predetermined touch manipulation.

In operation 303, the control module 107 may specify a destination to receive a message including the URI of the webpage and the additional information. For example, in the case of FIG. 4A or 4B, the message includes m.news.naver.com as a URI and may include user's comments about the shaded portion 401 or 402 as additional information. The destination, as mentioned above, may be user identification information or terminal identification information.

According to an embodiment of the present disclosure, operation 303 may include selecting an object that matches a messaging service for transmitting a message with the user identification information of the destination. The object may correspond to one that matches "a messaging service for transmitting a message" with "the user identification information of the destination". As mentioned above, the "messaging service" may be a service that is frequently used in the past with respect to a user of a corresponding destination or may be a service that is activated currently in the background.

Referring to FIG. 4A, in the object 403, "Chat On" may be set as "messaging service" and "Chat On account" of a user corresponding to an image of the object 403 may be set as "user identification information of destination". For example, a user of the electronic device 100 may generate a sidebar 410 about the shaded portion 401 selected in operation 301. Then, in operation 303, a user may select the object 403 that matches a message service "Chat On" for transmitting a message with "Chat On account" of a destination. By this, the destination may be specified.

For another example, referring to FIG. 4B, a user of the electronic device 100 may generate a menu bar 420 about the shaded portion 402 by a long press on the shaded portion 402, which is selected in operation 301. Then, in operation 303, a user may select the object 404 that matches the message service "Chat On" for transmitting a message with "Chat On account" of the destination. By this, the destination may be specified.

According to an embodiment of the present disclosure, operation 303 may include selecting an object that matches a network for transmitting the message with the terminal identification information of the destination. The object may correspond to one that matches "a network for transmitting a message" with "the terminal identification information of the destination". For example, the object may be activated only when a terminal of a destination corresponding to "network" is connected.

Referring to FIG. 4A, in the object 405, "Bluetooth" may be set as "network" and "MAC address" of an electronic device carried by a user shown in the object 405. For example, the electronic device 100 may generate a sidebar 410 about the shaded portion 401 selected in operation 301. Then, a user may select an object 405 that matches a "Bluetooth" wireless network with "MAC address" of an electronic device at the destination.

In such a way, when messaging service or network and the identification information of a destination are abstracted as one object, it may provide a more convenient user experience to a user of the electronic device 100.

According to an embodiment of the present disclosure, operation 303 may include specifying a plurality of destinations grouped in advance by selecting a predetermined object. For example, referring to FIG. 4A, the electronic device 100 may generate a sidebar 410 about the shaded portion 401 selected in operation 301. Then, in operation 303, a user may specify a plurality of predetermined destinations by selecting the object 406 of the sidebar 410.

In operation 305, the communication module 105 may transmit the message to the plurality of destinations specified in operation 303 through a network. The network, for example, may be a wired communication network or a 3G/4G wireless communication network, and also may be a direct communication network. In transmitting the message, the communication module 105 may use a messaging service or a network corresponding to a specified destination.

For example, as shown in FIG. 4A, if the object 403 is selected while a destination is specified, the communication module 105 may transmit a message to a server that provides a "Chat On" messaging service through a 3G/4G wireless communication network. A user of the destination may receive push notifications from the server and then may receive the message. For another example, as shown in FIG. 4A, if the object 405 is selected while a destination is specified, the communication module 105 may transmit a message to an electronic device having the MAC address corresponding to the object 405 through a "Bluetooth" wireless communication network.

In another embodiment of the present disclosure, if the data size of additional information included in a message is greater than or equal to a predetermined size, the control module 107 may generate the additional information as an additional file. For example, the control module 107 may generate path data on the network for specifying the additional file and may include it in a message. The communication module 105 may transmit an addition file including the additional information to a server in advance and in addition to transmitting a message including the path data to a destination. An electronic device at the destination may receive a message including a URI and the path data. After accessing the predetermined server, the electronic device at the destination may obtain the additional information by accessing the additional file depending on the path data.

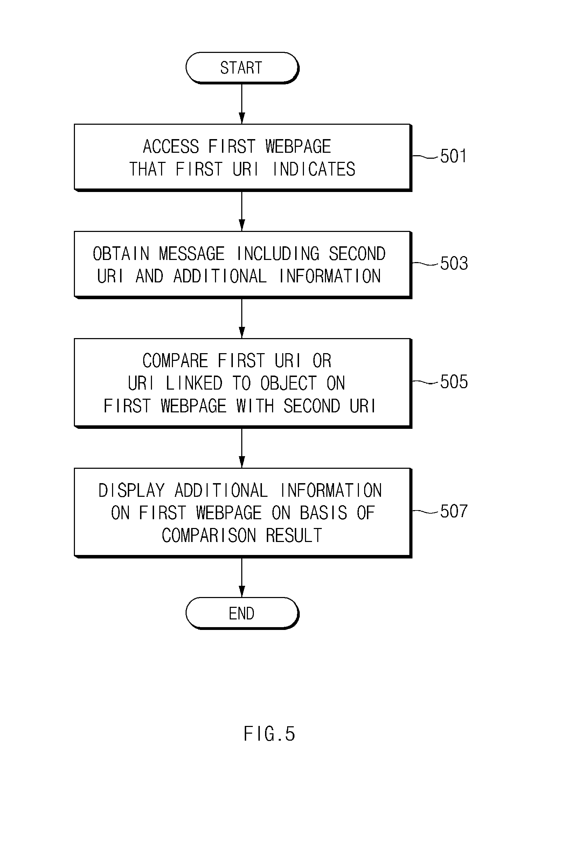

FIG. 5 is a flowchart illustrating an additional information displaying method in an information sharing method according to various embodiments of the present disclosure.

Referring to FIG. 5, an information sharing method of an electronic device includes operation 501 for accessing a first webpage that a first URI indicates, operation 503 for obtaining a message that includes a second URI indicating a second webpage and additional information about content on the second webpage, operation 505 for comparing the first URI or a URI linked to an object on the first webpage with the second URI, and operation 507 for displaying at least part of the additional information on the first webpage depending on a result of the comparison.

In operation 501, the communication module 105 may access the first webpage that the first URI indicates.

In operation 503, the message acquisition module 103 may obtain a message that includes the second URI indicating the second webpage and additional information about content on the second webpage. For example, the message acquisition module 103 may obtain a message by receiving the message from another electronic device through the communication module 105. The message acquisition module 103 may obtain and read a message from the storage module 109 storing the message.

In operation 505, the control module 107 may compare the first URI or a URI linked to an object on the first webpage with the second URI. The comparison in operation 505 is not limited to a comparison of the first URI and the second URI or a comparison of the URI linked to the object and the second URI. The comparison is determined based on whether there is a portion relating to the second URI on a screen including the first webpage.

According to an embodiment of the present disclosure, the control module 107 may determine whether the first URI and the second URI correspond (or are identical) to each other. According to another embodiment of the present disclosure, the control module 107 may determine whether the second URI corresponds (or is identical) to the URI linked to the object on the first webpage.

In operation 507, the control module 107 may control on the display module 111 to display at least part of additional information on the first webpage depending on a result of the comparison (or determination) in operation 505.

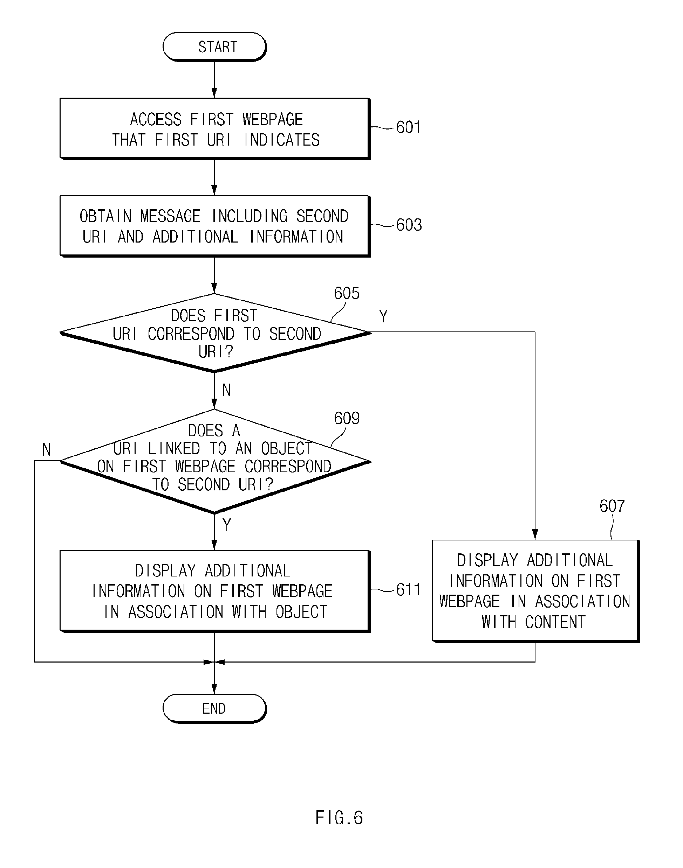

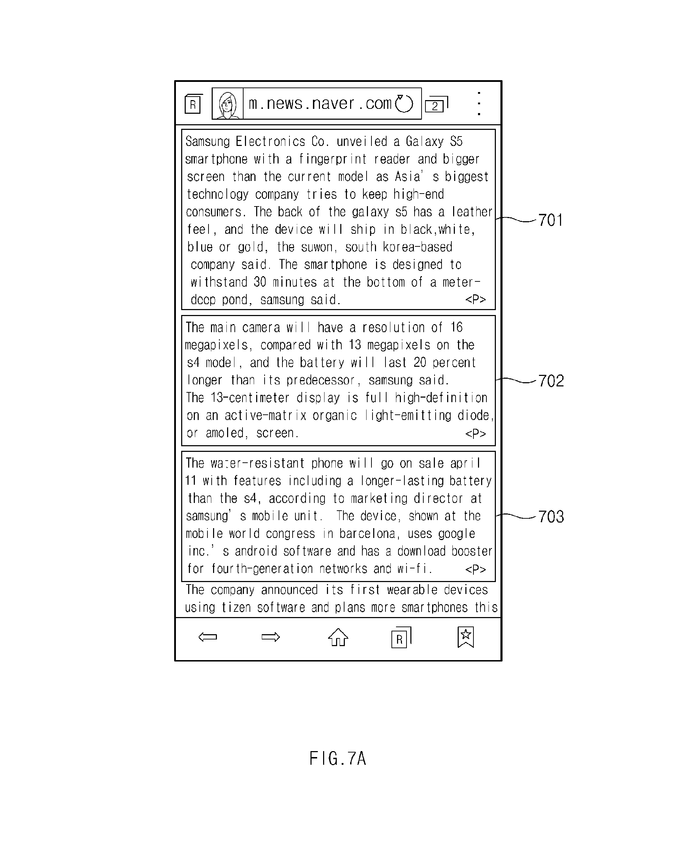

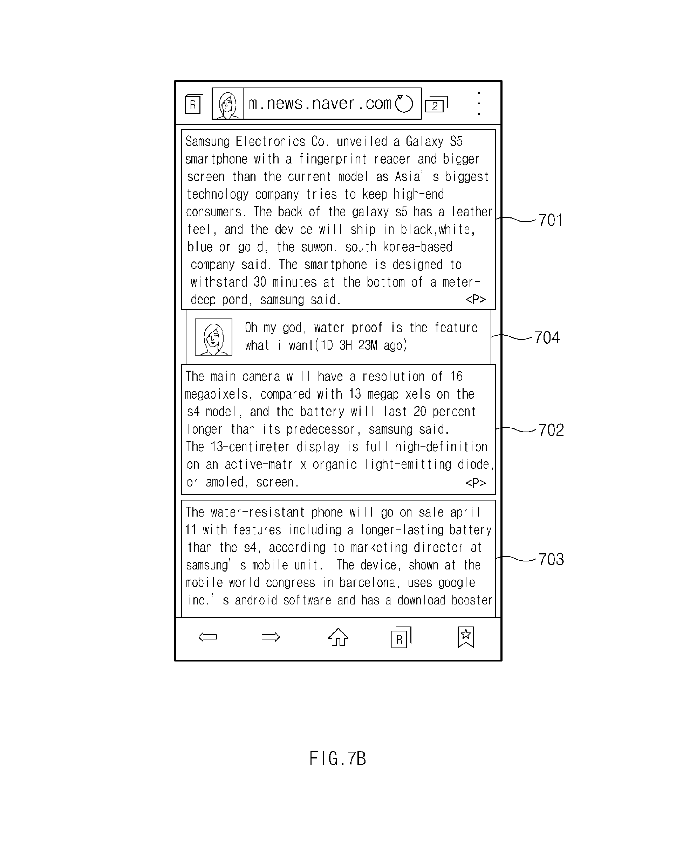

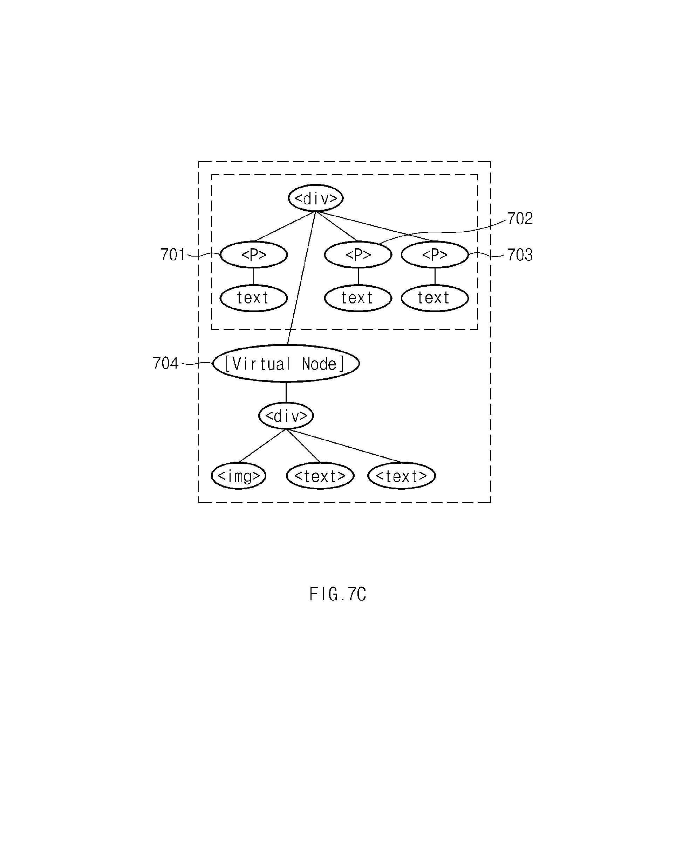

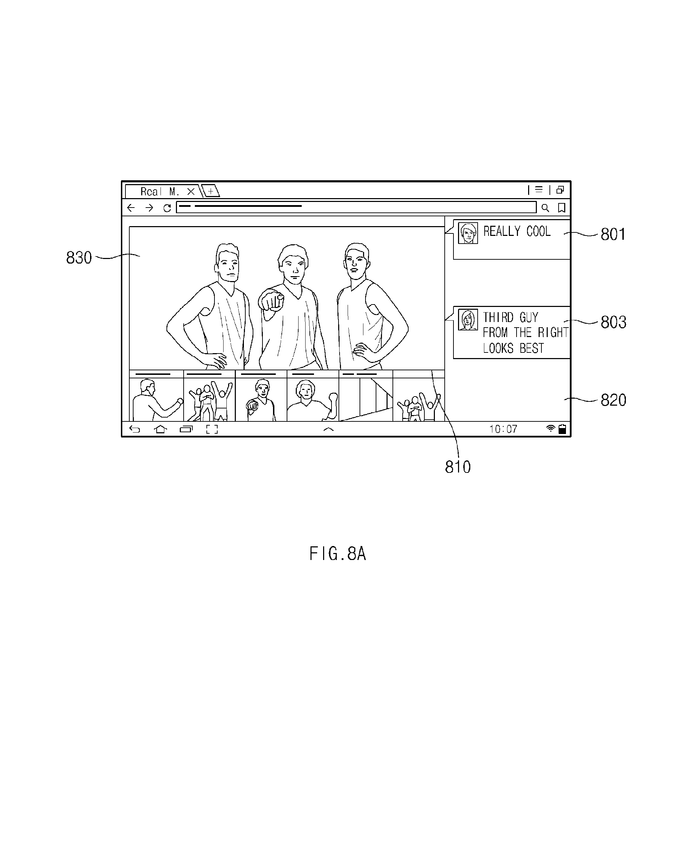

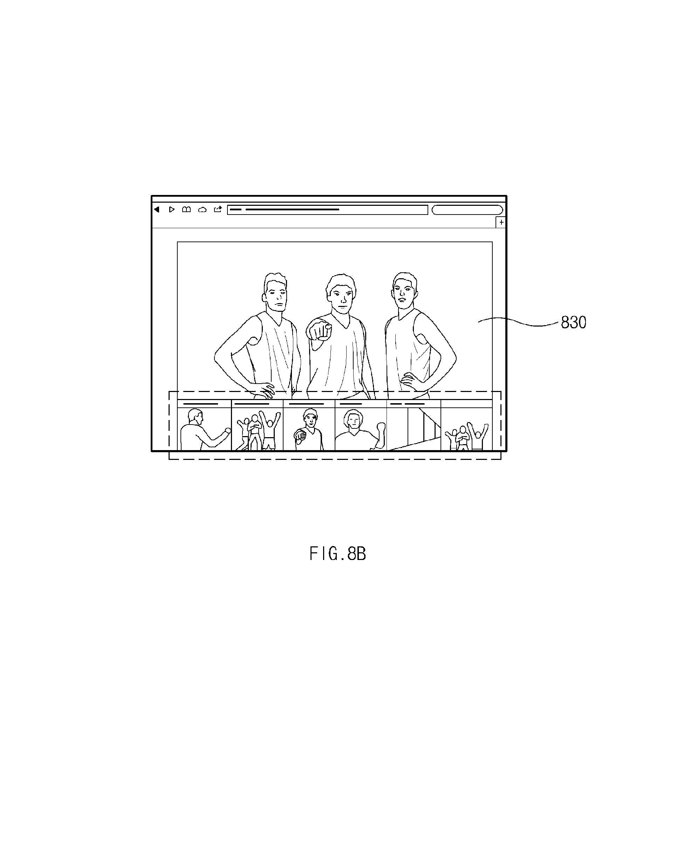

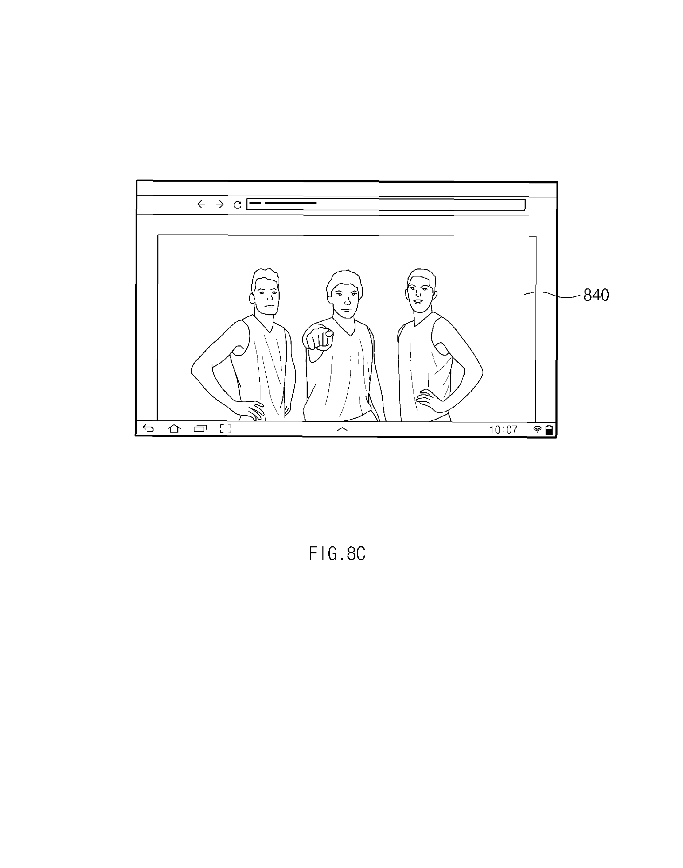

FIG. 6 is a flowchart illustrating an additional information displaying method in an information sharing method according to various embodiments of the present disclosure. Additionally, FIGS. 7 and 8 are screenshot views illustrating an additional information displaying method in an information sharing method according to various embodiments of the present disclosure.

Referring to FIG. 6, an information sharing method of an electronic device includes operation 601 for accessing a first webpage that a first URI indicates, operation 603 for obtaining a message that includes a second URI indicating a second webpage and additional information about content on the second webpage, operation 605 for comparing the first URI with the second URI, operation 607 for relating the additional information to content on the first webpage corresponding to the content and displaying it when the first URI corresponds to the second URI, operation 609 for comparing a URI linked to an object on the first webpage with the second URI, and operation 611 for relating the additional information to the object and displaying it on the first webpage when the URI linked to the object on the first webpage corresponds to the second URI.

Since operation 601 and operation 603 correspond to operation 501 and operation 503 of FIG. 5, detailed descriptions thereof are omitted.

In operation 605, the control module 107 may compare the first URI with the second URI. That is, the URI (e.g., the first URI) of the first webpage to be accessed through the communication module 105 may be compared with the second URI included in a message that the message acquisition module 103 obtains. Such a comparison is not limited to determining whether URIs are identical to each other superficially. It should be interpreted that output contents of the first webpage that the communication module 105 is to access and the second webpage that the second URI included in a message indicates are compared. Accordingly, where the first URI corresponds to the second URI includes a case where a second page that the second URI indicates is completely included in the first webpage that the first URI indicates in addition to a case where the first URI is identical to the second URI. If the first URI corresponds to the second URI in operation 605, the method proceeds to operation 607, and if not proceeds to operation 609.

In operation 607, if the first URI corresponds (e.g., is identical) to the second URI, the control module 107 may control the display module 111 to display additional information in association with content on the first webpage corresponding to the content on the second webpage. That is, if the first URI corresponds to the second URI, the communication module 105 of the electronic device 100 at the destination side may access a webpage that is identical to a webpage at the time that an electronic device at the transmission side inputs additional information. The control module 107 of the electronic device 100 at the destination side may associate additional information included in a message with content on the same webpage and display it. Thus, users of electronic devices at the transmission side and the reception side may share additional information on a webpage.

Additionally, where additional information is displayed in association with the content may include a case where additionally information is displayed in an empty space around the content and a case where at least part of additional information is displayed in an opaque pop-up form (or semi-transparently) and overlaid on the content.

In operation 607, the control module 107 may reconfigure content on the first webpage accessed through the communication module 105 and may insert at least part of additional information between the related content and other content and display it. As configuring contents on the first webpage, the control module 107 may allocate a virtual node to additional information and may insert the allocated virtual node into between the nodes of the contents on the first webpage. By this, it may prevent content relating to additional information and other content from being hidden by the additional information.

For example, referring to FIG. 7A, the communication module 105 of the electronic device 100 at the destination side may access a webpage (e.g., a first webpage) of FIG. 7A having the URI of m.news.naver.com and the message acquisition module 103 may obtain a message including a URI identical to the above URI and additional information 704. In this case, the control module 107, as shown in FIG. 7B, may control to reconfigure contents 701 to 703 on the first webpage, and insert the additional information 704 in between content 701 relating to the additional information 704 and another content 702 and display it. Referring to FIG. 7C, a virtual node is generated between the content 701 and the content 702 and the additional information 704 may be inserted into the virtual node. The control module 107 may set the virtual node as the next node (or the next sibling) of the content 701 and generate it.

In operation 607, the control module 107 may control the display module 111 to display at least part of the additional information in a predetermined space on the first webpage. The predetermined space may include a predetermined space at one side of the top, bottom, and left and right sides of the first webpage.

For example, referring to FIG. 8A, additional information 801 and 803 about content 810 may be listed and displayed in a predetermined space 820 at the right part of the (first) webpage that the communication module 105 accesses. By this, a user may receive a plurality of additional information in a neatly organized form.

On the other hand, a large number of PC version webpages and contents on webpages may be designed to be displayed optimal to a screen whose aspect ratio is 4:3. For example, as shown in FIG. 8B, the content 830 is designed with an aspect ratio of 4:3. However, some electronic devices (e.g., a tablet type terminal and a laptop PC) may have an aspect ratio of 16:9 as shown in FIGS. 8A and 8C. Due to a difference in aspect ratio, a screen shown in FIG. 8C displays only the content 840 and does not display a dotted portion of the content 830 shown in FIG. 8B in one screen. However, since the electronic device 100, as shown in FIG. 8A, lists and displays the additional information 801 and 803 about the content 810 in the predetermined space 820 at the right part of the webpage, it may display the content 810 and the dotted portion in one screen.

In operation 609, if the first URI does not correspond to the second URI, the control module 107 may compare a URI linked to an object on the first webpage and the second URI. The comparison is not limited to an operation determining whether a URI linked to an object on the first webpage corresponds (or is identical) to the second URI. This should be determined based on whether an object (e.g., a hypertext, image, or text list) included in the first webpage substantially refers to the second webpage. Accordingly, where a URI linked to an object on the first webpage corresponds to the second URI may include a case where the second URI is written as it is in the source code of the first webpage and a case where an object referring (or linking) to the second webpage is included in the first webpage and displayed.

If the second URI corresponds to the URI linked to an object on the first webpage in operation 609, the method proceeds to operation 611, and if not in operation 609, the operation ends.

In operation 611, if a URI linked to an object on the first webpage corresponds to the second URI, the method may associate additional information with the object on the first webpage. For example, the control module 107 may recognize an object implying the second webpage when parsing the first webpage. Then, the control module 107 may associate additional information with the recognized object and control the display module to display it. Therefore, a user of the electronic device 100 may intuitively know that there is additional information of another user in the second webpage that the object links.

According to an embodiment of the present disclosure, the control module 107 may control the display module 111 to allow at least part of the additional information to be displayed adjacent to the object in operation 611. For example, at least part of the additional information may be displayed in a balloon form in an empty space around the object. Therefore, a user more intuitively knows that there is additional information in the second webpage that the object implies.

Additionally, according to an embodiment of the present disclosure, in operation 611, the control module 107 may control to display at least part of the additional information in a predetermined space on the first webpage. For example, when there is a plurality of the additional information, the control module 107 may list and display the plurality of additional information at one position in a predetermined space at one side of the first webpage. By this, a user may receive at least part of a plurality of additional information in a neatly organized form.

On the other hand, the above-mentioned message may include selectively or both identification information of a user who generates the additional information and identification information of a user who transmits the message.

According to an embodiment of the present disclosure, in operations 607 or 611, the control module 107 may control to display an image relating to a user who generates (or transmits) a message on a webpage depending on the identification information included in the message.

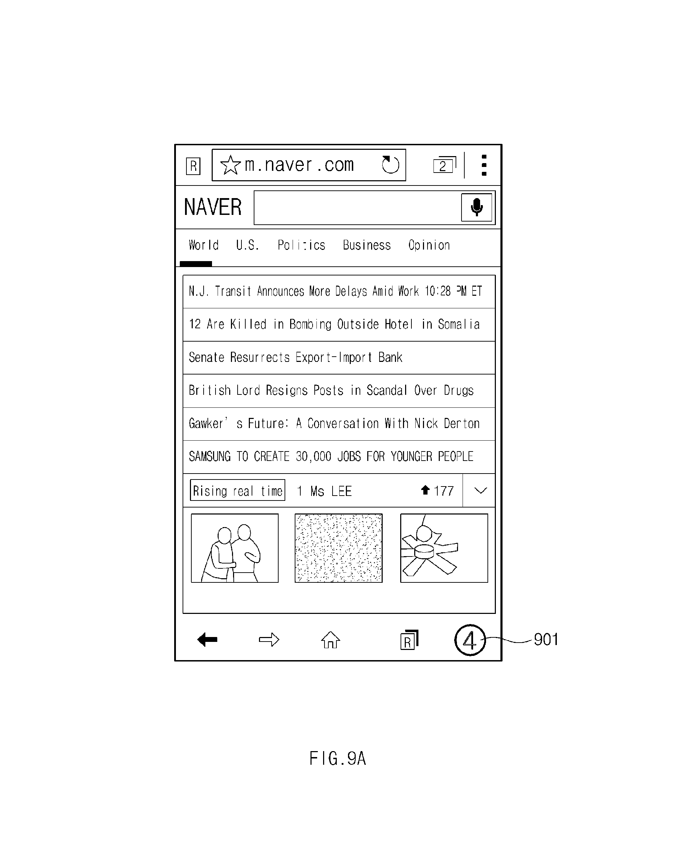

In more detail, the control module 107 may compare identification information included in a message with identification information stored in the storage module 109 of the electronic device 100 or a cloud storage. The control module 107 may read an image relating to a user who transmits a message from the storage module 109 or a cloud storage depending on a result of the comparison. Such an image, for example, may include an image displayed together with the additional information 704 of FIG. 7B, an image displayed together with the additional information 801 and 803 of FIG. 8A, images 911, 921 and 931 of FIGS. 9A to 9D as described below, and an image displayed together with additional information 912, 913, 922, 923, 932, and 933.

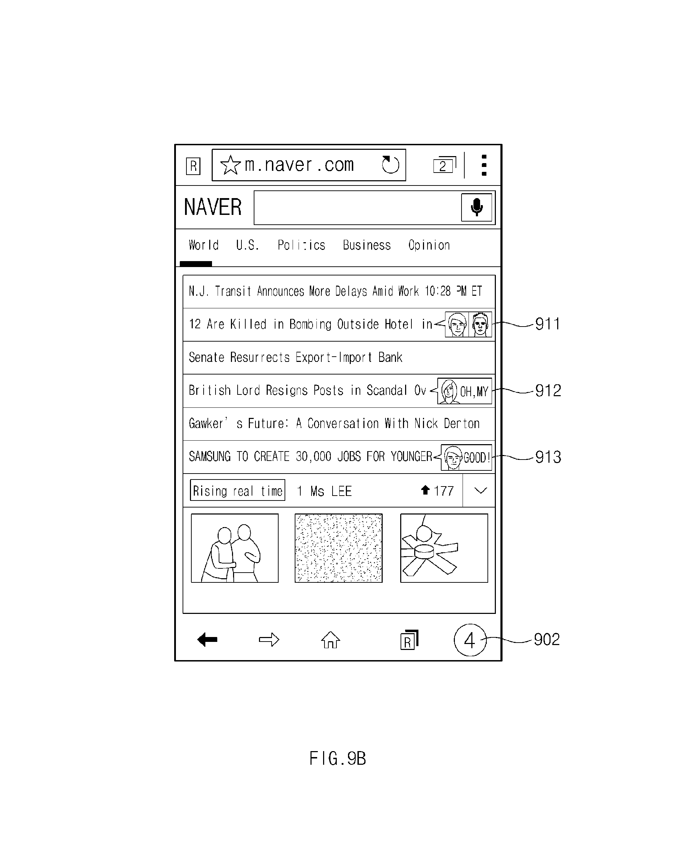

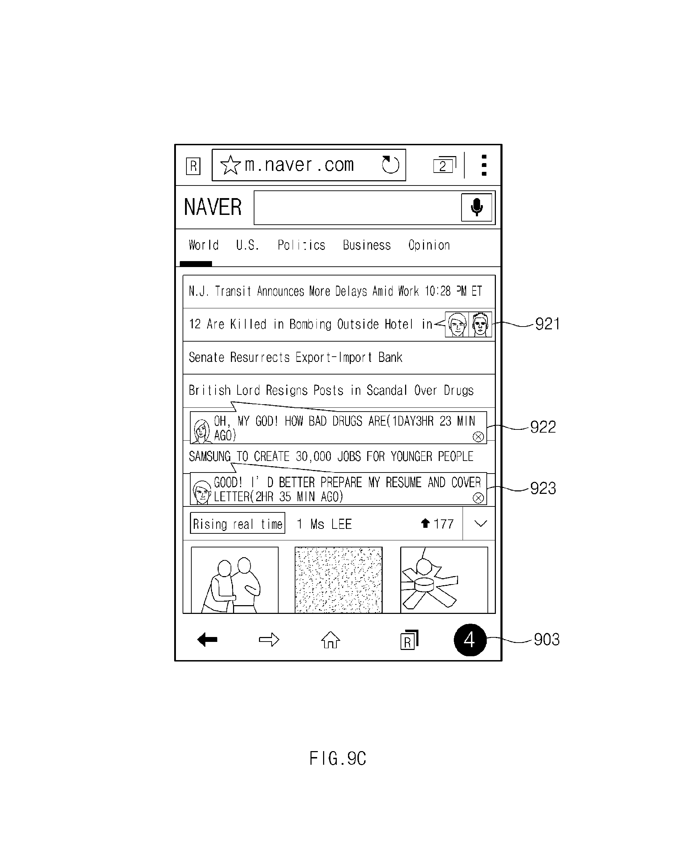

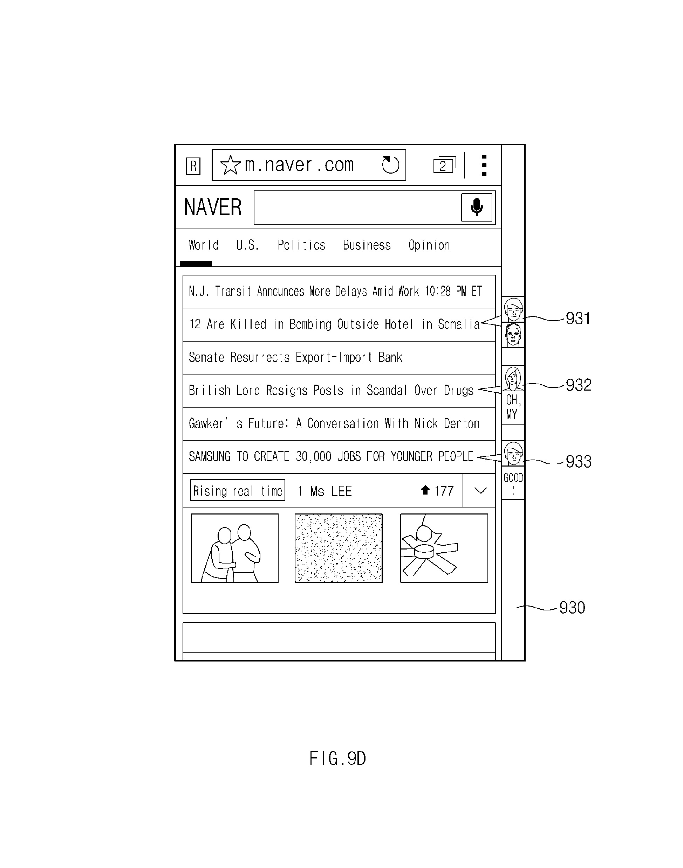

FIG. 9A, 9B, 9C and 9D are screenshot views illustrating screens of an electronic device where additional information is displayed in association with a corresponding object according to various embodiments of the present disclosure.

Referring to FIG. 9A, the electronic device 100 may access a first webpage (e.g., a webpage shown in FIG. 9A) that a first URI (e.g., m.naver.com) indicates through the communication module 105. The first webpage may include an object connecting a second URI and a message obtained by the message acquisition module 103 may include the second URI and additional information. The message acquisition module 103 may obtain a plurality of such messages. When there are a plurality of messages, the control module 107 may display the number of the plurality of messages as an object 901 (that is, 4). When a user selects the object 901, the screen of FIG. 9A may switch to the screen of FIG. 9B.

Referring to FIG. 9B, the control module 107 may control the image 911 and part of additional information 912 and 913 to be displayed adjacent to the respectively corresponding objects. A message relating to the image 911 may correspond to a message not including additional information. Like the object 901, the object 902 may represents the number of messages including a URI (that is, a URI linked to an object on the first webpage) included in the source code of the first webpage among a plurality of messages obtained by the message acquisition module 103. When a user selects the object 902, the screen of FIG. 9B may switch to the screen of FIG. 9C.

Referring to FIG. 9C, the control module 107 may reconfigure objects on the first webpage. Additionally, the control module 107 may insert an image 921 and additional information 922 and 923 between objects respectively relating thereto and another object and display them. Like the objects 901 and 902, the object 903 may represents the number of messages including a URI included in the source code of the first webpage in a message obtained by the message acquisition module 103. When a user selects the object 903, the screen of FIG. 9C may switch to the screen of FIG. 9D.

Referring to FIG. 9D, the control module 107 may control the display module 111 to display an image 931 and at least part of additional information 932 and 933 in a predetermined space 930 on the first webpage. By a user's manipulation, the screen of FIG. 9D may switch to the screen of FIG. 9A.

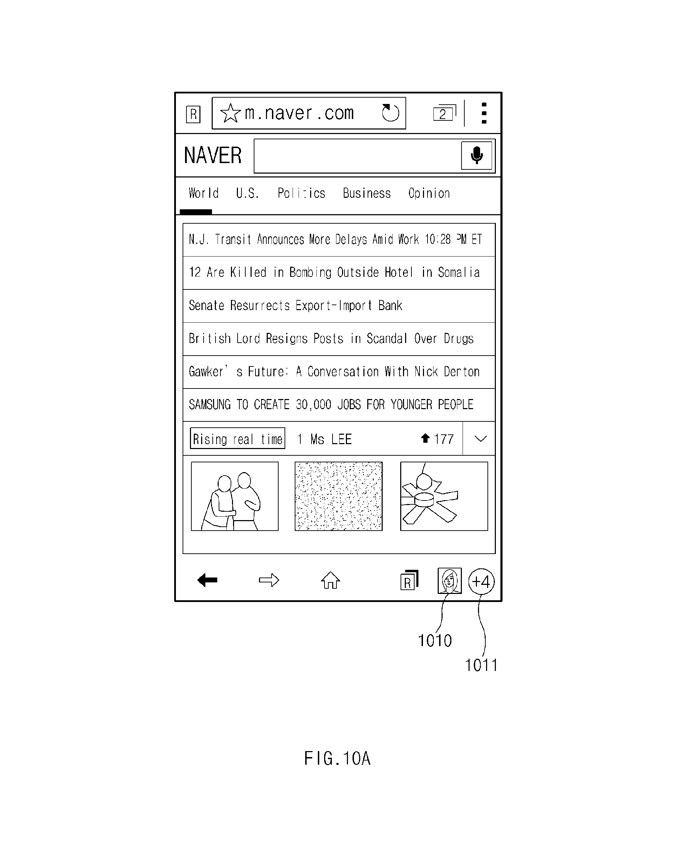

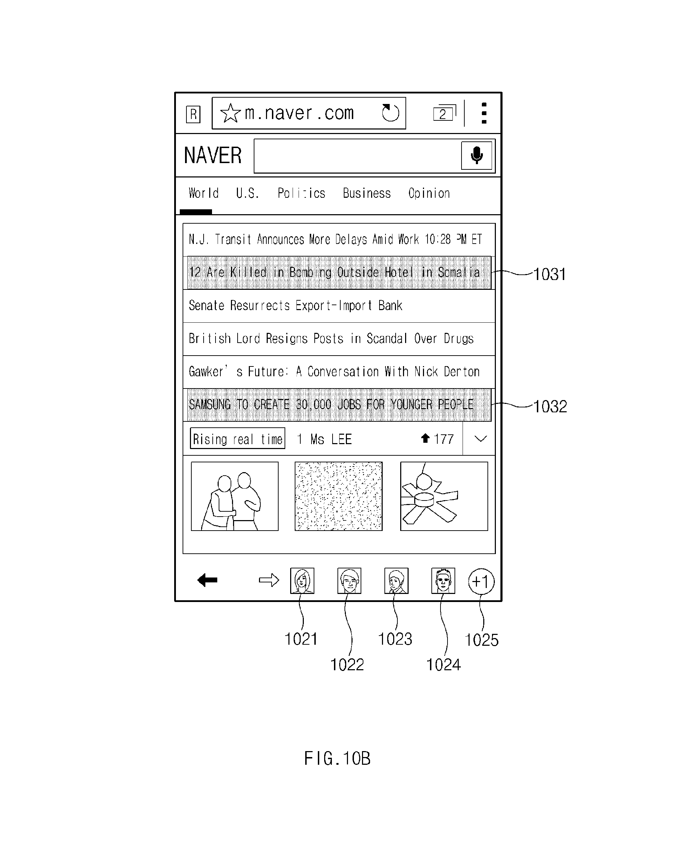

FIG. 10A and 10B are screenshot views illustrating another screen of an electronic device where additional information is displayed in association with a corresponding object according to various embodiments of the present disclosure.

The screen of FIG. 9A may be replaced with the screen of FIG. 10A. As a user selects an object 1011 or 1025, the screen of FIG. 10A and the screen of FIG. 10B may be switched with each other.

Referring to the screen of FIG. 10A, an object 1010 may represent that messages are received from four users in addition to a user relating to the object 1010. When a user selects the object 1011, the screen of FIG. 10A switches to the screen of FIG. 10B and objects 1010 and 1011 may be replaced with objects 1021 to 1025. In the screen of FIG. 10B, the objects 1021 to 1025 may represent that a message is received from one user in addition to users relating to the objects 1021 to 1025.

When a user selects one of the objects 1021 to 1024, a message that a user of the selected object transmits may be specified. The control module 107 may emphasize (e.g., highlight) an object relating to the specified message and output it to the display module 111. For example, when the object 1021 is selected, the objects 1031 and 1032 are emphasized and outputted.

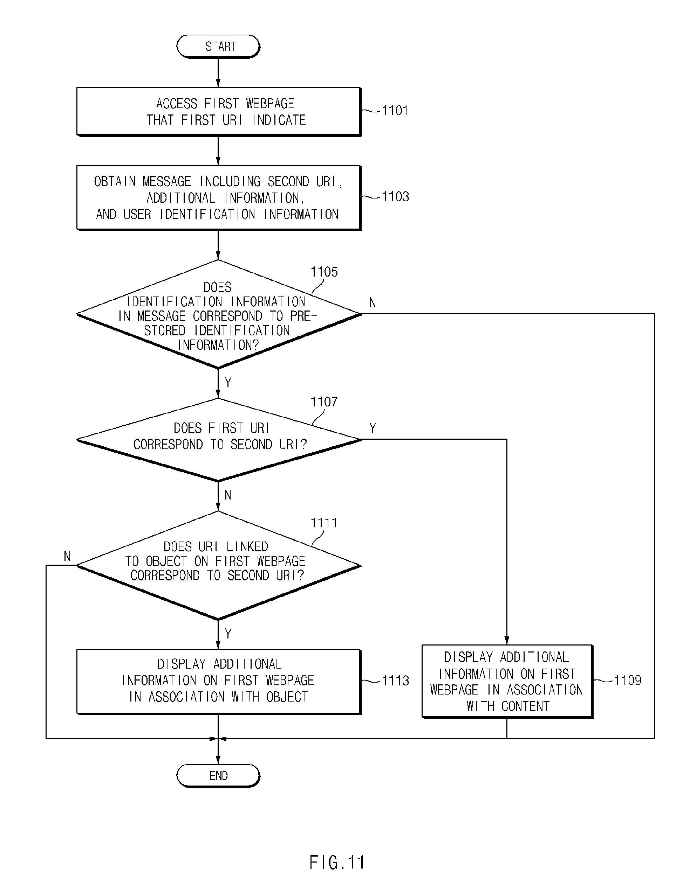

FIG. 11 is a flowchart illustrating an additional information displaying method in an information sharing method according to various embodiments of the present disclosure.

Referring to FIG. 11, an information sharing method of an electronic device includes operation 1101 for accessing a first webpage that a first URI indicates, operation 1103 for obtaining a message that includes a second URI indicating a second webpage, additional information about content on the second webpage, and user identification information, operation 1105 for determining whether the user identification information corresponds to identification information stored in the storage module 109, operation 1107 for comparing the first URI with the second URI, operation 1109 for relating the additional information to content on the first webpage corresponding to the content and displaying it when the first URI corresponds to the second URI, operation 1111 for comparing a URI linked to an object on the first webpage with the second URI, and operation 1113 for relating the additional information to the object and displaying it on the first webpage when the URI linked to the object on the first webpage corresponds to the second URI.

Since operations 1101, 1107, 1109, 1111, and 1113 correspond to operations 601, 605, 607, 609, and 611 of FIG. 6, detailed descriptions thereof are omitted.

In operation 1103, the message acquisition module 103 may obtain a message that includes user identification information in addition to the second URI indicating the second webpage and the additional information. The user identification information may include user identification information (e.g., a messaging service account) at the destination or terminal identification information (e.g., a MAC address) of a user at the destination.

In operation 1105, when the identification information of a user who transmits the message corresponds to identification information stored in advance in the storage module 109, the control module 107 may control to display at least part of the additional information on the first webpage. That is, when the identification information of a user who transmits a message is not stored in the storage module 109, the control module 107 may not display the additional information on the first webpage. By this, a message that is sent by a user who is not registered in the address book may not be displayed.

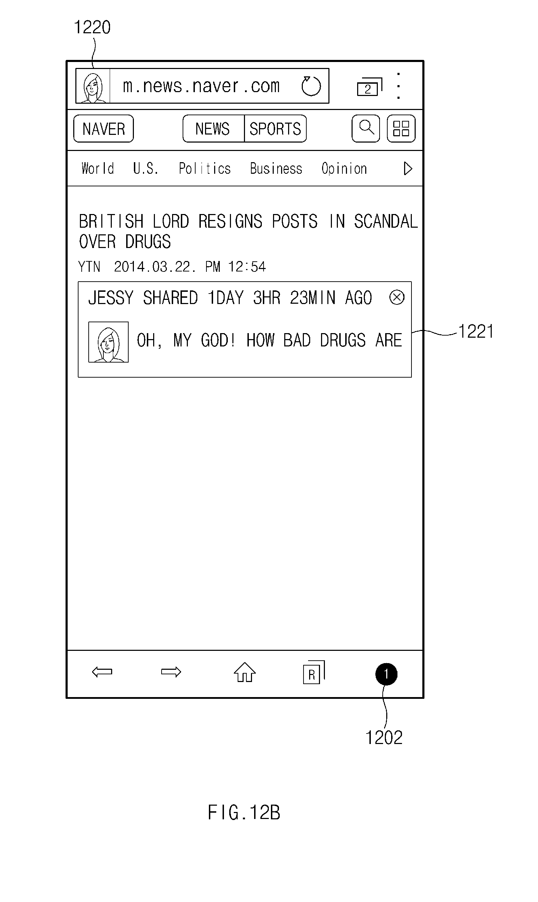

FIG. 12A, 12B, and 12C are screenshot views of an electronic device illustrating an additional information displaying method in an information sharing method according to various embodiments of the present disclosure.

Referring to FIG. 12A, a webpage that a first URI (e.g., m.naver.com) indicates is shown. The message acquisition module 103 of the electronic device 100 may obtain a message including a second URI (e.g., m.news.naver.com) and any additional information. When a URI linked to an object on the first webpage corresponds to the second URI, the control module 107, for example, may associate at least part 1212 of additional information with the object on the first webpage and display it. On the other hand, an object 1201 at the lower end of FIG. 12A may represent the number of message relating to the first webpage (e.g., in the case of FIG. 12A, four messages).

For example, when a user selects a portion 1212 of additional information, the screen of FIG. 12A may switch and scroll to the screen of FIG. 12C where additional information and content relating to the additional information are displayed together. Referring to FIG. 12C, additional information 1231 included in a message and content 1232 relating to the additional information 1231 are displayed on a webpage that the second URI (e.g., m.news.naver.com) indicates.

However, when a user selects the additional information 1212 of FIG. 12A, loading and scrolling may take time until switching to the screen of FIG. 12C. At this point, the control module 107, for example, may display the entire additional information 1221 in a pop-up form during the loading time as scrolling time as shown in FIG. 12B.

Additionally, the screens of FIGS. 12B and 12C may be displayed by selecting the additional information of FIG. 12A. Accordingly, the control module 107 may display an image, like favicons 1220 and 1230, relating to a user who generates the additional information at one side of an address window. Thus, a user of the electronic device 100 at the destination side may intuitively recognize a user who generates additional information. Additionally, in relation to an address window, distinction may be made with respect to the icon 1210 of FIG. 12A. Moreover, a position where an image (e.g., favicons 1220 and 1230 of FIG. 12B and FIG. 12C) relating to a user who generates additional information is displayed is not limited to one side of the address window. The image relating to a user who generates additional information may be opaquely or semi-transparently displayed in a predetermined space on a webpage.

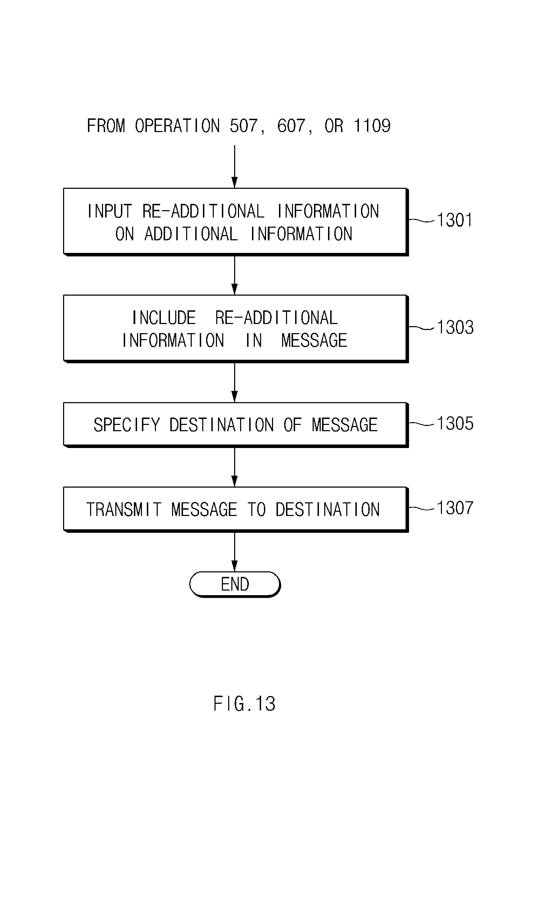

FIG. 13 is a flowchart illustrating a further information transmission method in an information sharing method according to various embodiments of the present disclosure.

Referring to FIG. 13, an information sharing method may further include operations 507, 607 and 1109 for displaying additional information, operation 1301 for receiving, by the control module 107, further information on the additional information from a user as following operation 1109, operation 1303 for including, by the control module 107, the further information in a message, operation 1305 for specifying, by the control module 107, a destination of the message, and operation 1307 for transmitting, by the control module 107, the message to the destination.

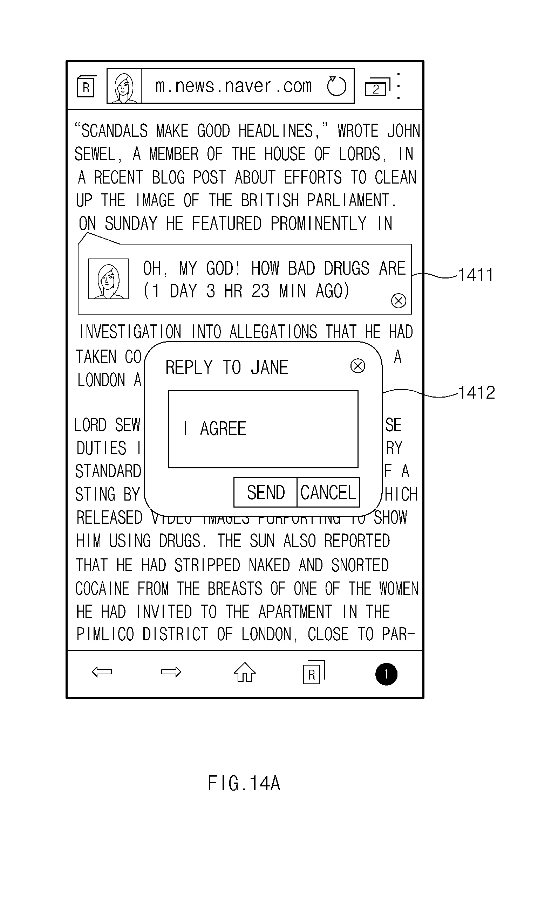

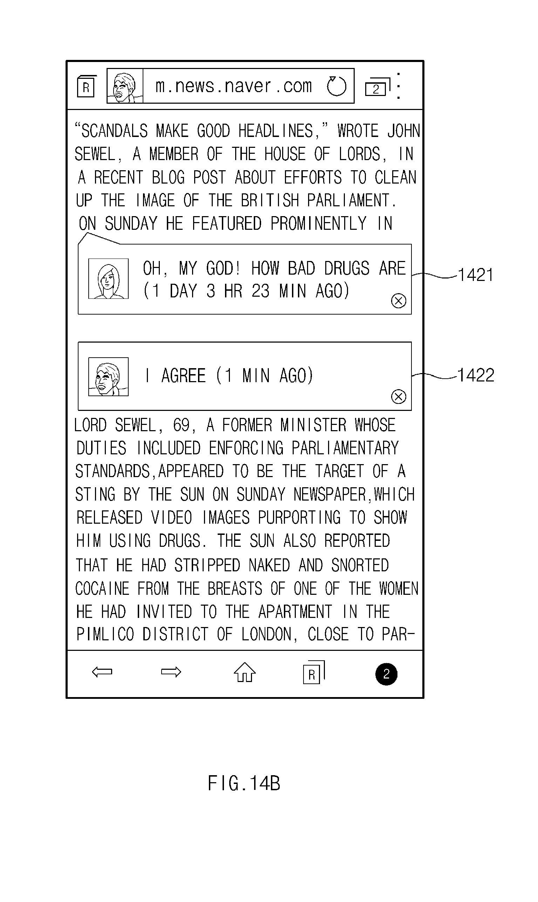

FIG. 14A and 14B are screenshot views illustrating a method of transmitting a message including further information in an information sharing method according to various embodiments of the present disclosure.

Referring to FIG. 13 and FIG. 14A, the input module 101, for example, may receive the further information 1412 on the additional information 1411 from a user in operation 1301 of FIG. 13. For example, a user of an electronic device may select the additional information 1411 in order to input the further information 1412. When the input module 101 receives the further information 1412, the control module 107, for example, may include the further information 1412 in a message in operation 1303 of FIG. 13. The control module 107, for example, may specify the destination of the message including the further information 1412 in operation 1305 of FIG. 13. The communication module 105, for example, may transmit the message to the specified destination in operation 1307 of FIG. 13. An electronic device at the destination side may display both the additional information 1421 of a third user and the further information 1422 of a user at the transmission side, as show in FIG. 14B.

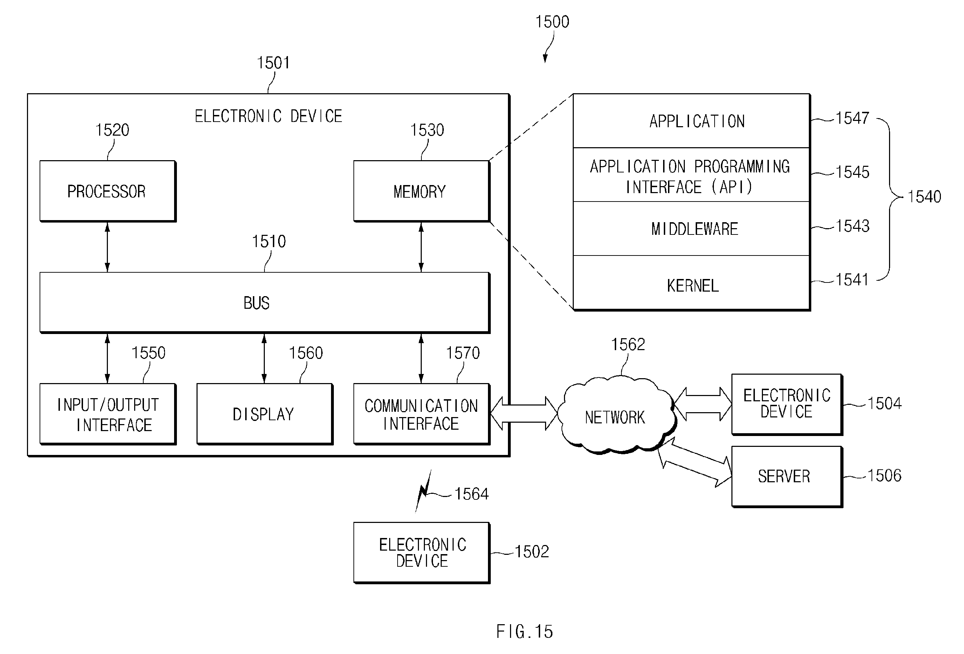

FIG. 15 is a schematic block diagram illustrating an electronic device in a network environment according to various embodiments of the present disclosure.

Referring to FIG. 15, the electronic device 1501 may correspond to the electronic device 100 or 200.

The electronic device 1501 may include a bus 1510, a processor 1520, a memory 1530, an input/output interface 1550, a display 1560, and a communication interface 1570. According to an embodiment of the present disclosure, the electronic device 1501 may omit at least one of the components or may additionally include different components.

The bus 1510, for example, may include a circuit for connecting the components 1520 to 1570 to each other and providing communication (e.g., control message and/or data) between the components 1520 to 1570.

The processor 1520 may include at least one of a central processing unit (CPU), an Application Processor (AP), and a communication processor (CP). The processor 1520, for example, may execute calculation or data processing for control and/or communication of at least one another component of the electronic device 1501. For example, the processor 1520 may perform functions of the message acquisition module 103 or the control module 107.

The memory 1530 (e.g., the storage module 109) may include volatile and/or nonvolatile memory. The memory 1530, for example, may store instructions or data relating to at least one component of the electronic device 1501. According to an embodiment of the present disclosure, the memory 1530 may store software and/or programs 1540. The programs 1540, for example, may include a kernel 1541, a middleware 1543, an application programming interface (API) 1545, and/or an application program (e.g., an application) 1547. At least part of the kernel 1541, the middleware 1543, or the API 1545 may be referred to as an operating system (OS).

The kernel 1541, for example, may control or manage system resources (for example, the bus 1510, the processor 1520, the memory 1530, and so on) used for performing operations or functions implemented in other programs (e.g., the middleware 1543, the API 1545, or the application program 1547). Additionally, the kernel 1541 may provide an interface for controlling or managing system resources by accessing an individual component of the electronic device 1501 from the middleware 1543, the API 1545, or the application program 1547.

The middleware 1543, for example, may serve as an intermediary role for exchanging data as the API 1545 or the application program 1547 communicates with the kernel 1541. Additionally, in relation to job requests received from the application program 1547, the middleware 1543, for example, may perform a control (e.g., scheduling or load balancing) for the job requests by using a method of assigning a priority for using a system resource (e.g., the bus 1510, the processor 1520, the memory 1530, and so on) of the electronic device 1501 to at least one application program among the application programs 1547.

The API 1545, as an interface for allowing the application 1547 to control a function provided from the kernel 1541 or the middleware 1543, may include at least one interface or function (e.g., an instruction) for file control, window control, image processing, or character control.

The input/output interface 1550, for example, may serve as an interface for delivering instructions or data inputted from a user or another external device to another component(s) of the electronic device 1501. Additionally, the input/output interface 1550 may output instructions or data received from another component(s) of the electronic device 1501 to a user or another external device. For example, the input/output interface 1550 may perform functions of the input module 101.

The display 1560, for example, may include a liquid crystal display (LCD), a light emitting diode (LED) display, an organic light emitting diode (OLED) display, a microelectromechanical systems (MEMS) display, or an electronic paper display. The display 1560 may display various content (e.g., text, images, video, icons, symbols, and so on) to a user. The display 1560 may include a touch screen, and for example, may receive a touch, gesture, proximity, or hovering input by using an electronic pen or a user's body part.

The communication interface 1570 (e.g., the communication module 105), for example, may set a communication between the electronic device 1501 and an external device (e.g., a first external electronic device 1502, a second external electronic device 1504, or a server 1506 (e.g., the web server 300)). For example, the communication interface 1570 may communicate with the second external electronic device 1504 or the server 1506 in connection to the network 1562 through wireless communication or wired communication.

The wireless communication may use LTE, LTE-A, CDMA, WCDMA, UMTS, WiBro, or GSM as a cellular communication protocol, for example. The wired communication, for example, may include at least one of universal serial bus (USB), high definition multimedia interface (HDMI), recommended standard 232 (RS-232), and plain old telephone service (POTS). The network 1562 may include telecommunications network, for example, at least one of computer network (e.g., LAN or WAN), internet, and telephone network.

Each of the first and second external electronic devices 1502 and 1504 may be the same or different type of the electronic device 1501. For example, each of the first and second external electronic devices 1502 and 1504 may be the electronic device 100 or 200. According to an embodiment of the present disclosure, the server 1506 (e.g., the web server 300) may include a group of one or more servers. According to various embodiments of the present disclosure, all or part of operations executed on the electronic device 1501 may be executed on one or more other electronic devices 1502 or 1504 or the server 1506. According to an embodiment of the present disclosure, when the electronic device 1501 performs a certain function or service automatically or by a request, it may request at least part of a function relating thereto from the electronic device 1502 or 1504 or the server 1506 instead of or in addition to executing the function or service by itself. The electronic device 1502 or 1504 or the server 1506 may execute the requested function or an additional function and may deliver an execution result to the electronic device 1501. The electronic device 1501 may provide the requested function or service by processing the received result as it is or additionally. For this, for example, cloud computing, distributed computing, or client-server computing technology may be used.

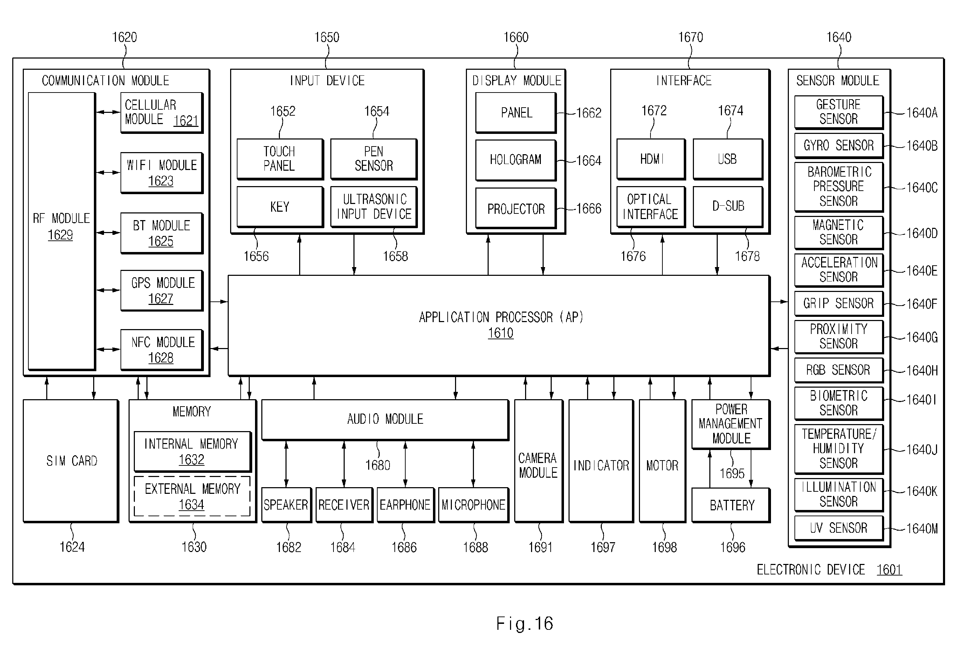

FIG. 16 is a block diagram 1600 of an electronic device according to various embodiments of the present disclosure.

Referring to FIG. 16, an electronic device 1601, for example, may include all or part of the above-mentioned electronic device 100 shown in FIG. 1. The electronic device 1601 may include application processor (AP) 1610, a communication module 1620, a subscriber identification module (SIM) card 1624, a memory 1630, a sensor module 1640, an input device 1650, a display 1660, an interface 1670, an audio module 1680, a camera module 1691, a power management module 1695, a battery 1696, an indicator 1697, and a motor 1698.

The AP 1610 may control a plurality of hardware or software components connected to the AP 1610 and also may perform various data processing and operations by executing an operating system or an application program. The AP 1610 may be implemented with a system on chip (SoC), for example. According to an embodiment of the present disclosure, the AP 1610 may further include a graphic processing unit (GPU) and/or an image signal processor. The AP 1610 may include at least part (e.g., the cellular module 1621) of components shown in FIG. 16. The AP 1610 may load commands or data received from at least one of other components (e.g., nonvolatile memory) and process them and may store various data in a nonvolatile memory. For example, the AP 1610 may perform functions of the message acquisition module 103 or the control module 107.

The communication module 1620 may have the same or similar configuration to the communication module 105 of FIG. 1. The communication module 1620 may include a cellular module 1621, a WiFi module 1623, a BT module 1625, a GPS module 1627, an NFC module 1628, and a radio frequency (RF) module 1629.

The cellular module 1621, for example, may provide voice call, video call, text service, or internet service through communication network. According to an embodiment of the present disclosure, the cellular module 1621 may perform a distinction and authentication operation on an electronic device 1601 in a communication network by using a subscriber identification module (e.g., the SIM card 1624). According to an embodiment of the present disclosure, the cellular module 1621 may perform at least part of a function that the AP 1610 provides. According to an embodiment of the present disclosure, the cellular module 1621 may further include a communication processor (CP).

Each of the WiFi module 1623, the BT module 1625, the GPS module 1627, and the NFC module 1628 may include a processor for processing data transmitted/received through a corresponding module. According to an embodiment of the present disclosure, at least part (e.g., at least one) of the cellular module 1621, the WiFi module 1623, the BT module 1625, the GPS module 1627, and the NFC module 1628 may be included in one integrated chip (IC) or IC package.

The RF module 1629, for example, may transmit/receive communication signals (e.g., RF signals). The RF module 1629, for example, may include a transceiver, a power amp module (PAM), a frequency filter, a low noise amplifier (LNA), or an antenna. According to another embodiment of the present disclosure, at least one of the cellular module 1621, the WiFi module 1623, the BT module 1625, the GPS module 1627, and the NFC module 1628 may transmit/receive RF signals through a separate RF module.

The SIM card 1624 may include a SIM and/or an embedded SIM and also may include unique identification information (e.g., an integrated circuit card identifier (ICCID)) or subscriber information (e.g., an international mobile subscriber identity (IMSI)).

The memory 1630 (e.g., the memory 109) may include an internal memory 1632 or an external memory 1634. The internal memory 1632 may include at least one of a volatile memory (e.g., dynamic RAM (DRAM), static RAM (SRAM), synchronous dynamic RAM (SDRAM)) and a non-volatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, and NOR flash memory).

The external memory 1634 may further include flash drive, for example, compact flash (CF), secure digital (SD), micro Micro-SD, Mini-SD, extreme digital (xD), or a memorystick. The external memory 1634 may be functionally and/or physically connected to the electronic device 1601 through various interfaces.

The sensor module 1640 measures physical quantities or detects an operating state of the electronic device 1601, thereby converting the measured or detected information into electrical signals. The sensor module 1640 may include at least one of a gesture sensor 1640A, a gyro sensor 1640B, a barometric pressure sensor 1640C, a magnetic sensor 1640D, an acceleration sensor 1640E, a grip sensor 1640F, a proximity sensor 1640G, a color sensor 1640H (e.g., a red, green, blue (RGB) sensor), a biometric sensor 1640I, a temperature/humidity sensor 1640J, an illumination sensor 1640K, and an ultra violet (UV) sensor 1640M. Additionally or alternatively, the sensor module 1640 may include an E-nose sensor, an electromyography (EMG) sensor, an electroencephalogram (EEG) sensor, an electrocardiogram (ECG) sensor , an infrared (IR) sensor, an iris sensor, or a fingerprint sensor. The sensor module 1640 may further include a control circuit for controlling at least one sensor therein. According to an embodiment of the present disclosure, the electronic device 1601 may further include a processor configured to control the sensor module 1640 as part of or separately from the AP 1610 and thus may control the sensor module 1640 while the AP 1610 is in a sleep state.

The input device 1650 (e.g., the input module 101) may include a touch panel 1652, a (digital) pen sensor 1654, a key 1656, or an ultrasonic input device 1658. The touch panel 1652 may use at least one of capacitive, resistive, infrared, or ultrasonic methods, for example. Additionally, the touch panel 1652 may further include a control circuit. The touch panel 1652 may further include a tactile layer to provide tactile response to a user.

The (digital) pen sensor 1654, for example, may include a sheet for recognition as part of a touch panel or a separate sheet for recognition. The key 1656 may include a physical button, an optical key, or a keypad, for example. The ultrasonic input device 1658 may check data by detecting sound waves through a microphone 1688 in the electronic device 1601 through an input tool generating ultrasonic signals.

The display 1660 (e.g., the display module 111) may include a panel 1662, a hologram device 1664, or a projector 1666. The panel 1662 may have the same or similar configuration to the display 1560 of FIG. 15. The panel 1662 may be implemented to be flexible, transparent, or wearable, for example. The panel 1662 and the touch panel 1652 may be configured with one module. The hologram 1664 may show three-dimensional images in the air by using the interference of light. The projector 1666 may display an image by projecting light on a screen. The screen, for example, may be placed inside or outside the electronic device 1601. According to an embodiment of the present disclosure, the display 1660 may further include a control circuit for controlling the panel 1662, the hologram device 1664, or the projector 1666.

The interface 1670 may include a high-definition multimedia interface (HDMI) 1672, a universal serial bus (USB) 1674, an optical interface 1676, or a D-subminiature (sub) 1678, for example. The interface 1670, for example, may be included in the communication interface 105 shown in FIG. 2. Additionally or alternately, the interface 1670 may include a mobile high-definition link (MHL) interface, a secure Digital (SD) card/multi-media card (MMC) interface, or an infrared data association (IrDA) standard interface.

The audio module 1680 may convert sound into electrical signals and convert electrical signals into sounds. At least some components of the audio module 1680, for example, may be included in the input/output interface 1550 shown in FIG. 15. The audio module 1680 may process sound information inputted/outputted through a speaker 1682, a receiver 1684, an earphone 1686, or microphone 1688.

The camera module 1691, is a device for capturing a still image and a video, and may include at least one image sensor (e.g., a front sensor or a rear sensor), a lens, an image signal processor (ISP), or a flash) (e.g., an LED or a xenon lamp).

The power management module 1695 may manage the power of the electronic device 1601. According to an embodiment of the present disclosure, the power management module 1695 may include a power management IC (PMIC), a charger IC, or a battery gauge, for example. The PMIC provide a wired and/or wireless charging method. As the wireless charging method, for example, there is a magnetic resonance method, a magnetic induction method, or an electromagnetic method. An additional circuit for wireless charging, for example, a circuit such as a coil loop, a resonant circuit, or a rectifier circuit, may be added. The battery gauge may measure the remaining amount of the battery 1696, or a voltage, current, or temperature thereof during charging. The battery 1696, for example, may include a rechargeable battery and/or a solar battery.

The indicator 1697 may display a specific state of the electronic device 1601 or part thereof (e.g., the AP 1610), for example, a booting state, a message state, or a charging state. The motor 1698 may convert electrical signals into mechanical vibration and may generate vibrations or a haptic effect. Although not shown in the drawings, the electronic device 1601 may include a processing device (e.g., a GPU) for mobile TV support. A processing device for mobile TV support may process media data according to the standards such as digital multimedia broadcasting (DMB), digital video broadcasting (DVB), or media flow.

According to various embodiments of the present disclosure, a user may easily share content and comments on the content with another user.

Each of the above-mentioned components of the electronic device according to various embodiments of the present disclosure may be configured with at least one component and the name of a corresponding component may vary according to the type of electronic device. According to various embodiments of the present disclosure, an electronic device according to various embodiments of the present disclosure may include at least one of the above-mentioned components, may not include some of the above-mentioned components, or may further include another component. Additionally, some of components in an electronic device according to various embodiments of the present disclosure are configured as one entity, so that functions of previous corresponding components are performed identically.

The term "module" used in various embodiments of the present disclosure, for example, may mean a unit including a combination of at least one of hardware, software, and firmware. The term "module" and the term "unit", "logic", "logical block", "component", or "circuit" may be interchangeably used. The "module" may be a minimum unit or part of an integrally configured component. The "module" may be a minimum unit performing at least one function or part thereof. The "module" may be implemented mechanically or electronically. For example, the term "module" according to various embodiments of the present disclosure may include at least one of an application-specific integrated circuit (ASIC) chip performing certain operations, field-programmable gate arrays (FPGAs), or a programmable-logic device, all of which are known or may be developed in the future.

According to various embodiments of the present disclosure, at least part of a device (e.g., modules or functions thereof) or a method (e.g., operations) according to this disclosure, for example, as in a form of a programming module may be implemented using an instruction stored in non-transitory computer-readable storage media. When at least one processor (e.g., the processor 1520) executes an instruction, it may perform a function corresponding to the instruction. The non-transitory computer-readable storage media may include the memory 1530, for example.

The non-transitory computer-readable storage media may include hard disks, floppy disks, magnetic media (e.g., magnetic tape), optical media (e.g., CD-ROM, and DVD), magneto-optical media (e.g., floptical disk), and hardware devices (e.g., ROM, RAM, or flash memory). Additionally, a program instruction may include high-level language code executable by a computer using an interpreter in addition to machine code created by a complier. The hardware device may be configured to operate as at least one software module to perform an operation of various embodiments of the present disclosure and vice versa.

A module or a programming module according to various embodiments of the present disclosure may include at least one of the above-mentioned components, may not include some of the above-mentioned components, or may further include another component. Operations performed by a module, a programming module, or other components according to various embodiments of the present disclosure may be executed through a sequential, parallel, repetitive or heuristic method. Additionally, some operations may be executed in a different order or may be omitted, and other operations may be added.

Moreover, the embodiments disclosed in this specification are suggested for the description and understanding of technical content but are not intended to limit the scope of the present disclosure. Accordingly, the scope of the present disclosure should be interpreted as including all modifications or various other embodiments based on the technical idea of the present disclosure, as defined by the appended clams and their equivalents.

## Claims

1. An electronic device comprising:
a communication module configured to access a first webpage indicated by a first URI;
a message acquisition module configured to obtain a message including a second URI that indicates a second webpage and additional information about content on the second webpage;
a display module; and
a control module configured to compare the first URI and/or a URI linked to an object on the first webpage with the second URI and to control the display module to display at least part of the additional information on the first webpage depending on a result of the comparison.

2. The electronic device of claim 1, wherein the control module is configured to, when the first URI corresponds to the second URI, control the display module to display said at least part of the additional information in association with content on the first webpage corresponding to the content on the second webpage.

3. The electronic device of claim 1, wherein the control module is configured to, when the URI linked to the object on the first webpage corresponds to the second URI, control the display module to display on the first webpage at least part of the additional information in association with said object.

4. The electronic device of claim 1, 2 or 3, wherein the message further comprises identification information of a user who transmits the message, and wherein the control module is configured to control the display module to display an image relating to the user on the first webpage on the basis of the identification information.

5. The electronic device of any of the claims 1-4, further comprising:
a storage module configured to store identification information of another user,
wherein the message further comprises identification information of a user who transmits the message; and
the control module is configured to control the display module to display at least part of the additional information on the first webpage, when the identification information of the user who transmits the message corresponds to identification information stored in the storage module.

6. An information sharing method of an electronic device, the method comprising:
accessing by the electronic device a first webpage indicated by a first URI;
receiving by the electronic device of a message including a second URI that indicates a second webpage and additional information about content on the second webpage;
comparing by the electronic device of the first URI and/or a URI linked to an object on the first webpage with the second URI; and
displaying on a display of the electronic device at least part of the additional information on the first webpage depending on a result of the comparison.

7. The method of claim 6, wherein displaying on the display of the electronic device of said at least part of the additional information on the first webpage comprises displaying, when the first URI corresponds to the second URI, at least part of the additional information in association with content on the first webpage corresponding to the content on the second webpage.

8. The method of claim 7, wherein displaying said at least part of the additional information on the first webpage comprises reconfiguring contents on the first webpage and inserting said at least part of the additional information into or between the content on the first webpage corresponding to the content on the second webpage and another content on the first webpage.

9. The method of claim 6, wherein displaying at least part of the additional information on the first webpage comprises displaying at least part of the additional information associated with the object when the URI linked to the object corresponds to the second URI.

10. The method of any of the claims 6-9, wherein the message further comprises identification information of a user who transmits the message; and wherein said at least part of the additional information on the first webpage is only displayed when the identification information of the user who transmits the message corresponds to identification information stored in the electronic device.

11. The method of any of the claims 6-10, further comprising:
receiving by the electronic device further information related to the additional information;
including by the electronic device the further information in the message;
obtaining by the electronic device a destination of the message; and
transmitting by the electronic device of the message to the destination.

12. An information sharing method of an electronic device, the method comprising:
obtaining by the electronic device additional information about content on a webpage;
generating by the electronic device a message including a Uniform Resource Identifier (URI) of the webpage and the obtained additional information;
obtaining by the electronic device a destination of the message; and
transmitting by the electronic device of the message to the obtained destination.

13. The method of claim 12, wherein the additional information comprises comments about the content.

14. The method of claim 12 or 13, wherein obtaining the destination of the message by the electronic device comprises obtaining a user selection of an object that matches a messaging service for transmitting the message with user identification information of the destination.

15. The method of claim 12, 13 or 14, wherein obtaining the destination of the message by the electronic device comprises obtaining a user selection of an object that matches a network for transmitting the message with terminal identification information of the destination.
